**Europäisches Patentamt**

**European Patent Office**

**Office européen des brevets**

(11) Veröffentlichungsnummer : **0 351 510 B1**

(12) **EUROPÄISCHE PATENTSCHRIFT**

(45) Veröffentlichungstag der Patentschrift :
29.07.92 Patentblatt 92/31

(51) Int. Cl.⁵ : **F02B 67/04, F16H 47/00**

(21) Anmeldenummer : **89108329.7**

(22) Anmeldetag : **09.05.89**

(54) **Selbstgeregeltes Zweistufengetriebe für den Antrieb der Nebenaggregate von Kraftfahrzeugmotoren.**

(30) Priorität : **04.07.88 DE 3822611**

(43) Veröffentlichungstag der Anmeldung :
**24.01.90 Patentblatt 90/04**

(45) Bekanntmachung des Hinweises auf die
Patenterteilung :
**29.07.92 Patentblatt 92/31**

(84) Benannte Vertragsstaaten :
**FR GB IT SE**

(56) Entgegenhaltungen :
**EP-A- 0 016 710**
**DE-A- 2 801 812**
**DE-A- 2 938 356**
**DE-A- 2 952 249**
**DE-A- 3 740 082**
**FR-A- 2 486 610**
**FR-A- 2 499 192**
**FR-A- 2 613 804**
**GB-A- 531 164**
**GB-A- 721 353**
**US-A- 3 502 056**
**US-A- 3 884 089**

(73) Patentinhaber : **Eisenmann, Siegfried A.,**
**Dipl.-Ing.**
**Conchesstrasse 25**
**W-7960 Aulendorf (DE)**
Patentinhaber : **Härle, Hermann**
**Conchesstrasse 23**
**W-7960 Aulendorf (DE)**

(72) Erfinder : **Eisenmann, Siegfried A., Dipl.-Ing.**
**Conchesstrasse 25**
**W-7960 Aulendorf (DE)**
Erfinder : **Härle, Hermann**
**Conchesstrasse 23**
**W-7960 Aulendorf (DE)**

(74) Vertreter : **Marx, Lothar, Dr.**
**Patentanwälte Schwabe, Sandmair, Marx**
**Stuntzstrasse 16**
**W-8000 München 80 (DE)**

**Beschreibung**

Gegenstand der Erfindung ist ein automatisches Zweiganggetriebe (also ein Zweiganggetriebe, das bei Erreichen einer bestimmten Drehzahl selbsttätig das Übersetzungsverhältnis ändert) für den Antrieb eines oder mehrerer Nebenaggregate (z.B. der Lichtmaschine, des Ventilators eines Kältekompressors oder einer Lenkhilfepumpe) eines Kraftfahrzeugverbrennungsmotors (in aller Regel ist das ein Kolbenmotor, es kann aber auch z.B. ein Drehkolbenmotor sein) mit einem Zahnradsatz, bei welchem mindestens ein Zahnrad, dessen Drehachse um die Drehachse eines anderen zu der Eingangswelle des Getriebes konzentrischen Zahnrades umläuft, mit letzterem im Eingriff ist, mit einem Schaltelement, das als Freilauf ausgebildet ist, und mit einem weiteren mit der Eingangswelle rotierenden durch Fliehkraft betätigbaren Schaltelement zum Abbremsen und Freigeben der Relativdrehung zwischen den Zahnrädern des Zahnradsatzes.

Kraftfahrzeugverbrennungsmotoren arbeiten in einem sehr großen Drehzahlbereich. Werden bestimmte Nebenaggregate mit einem konstanten Übersetzungsverhältnis durch den Motor angetrieben, so werden sie bei höheren Drehzahlen mit einer weitaus höheren Drehzahl angetrieben als sie benötigen, da auch bei der niedrigsten Drehzahl, also der Leerlaufdrehzahl des Motors, diese Nebenaggregate mit einer gewissen Mindestdrehzahl betrieben werden müssen. Dies hat zur Folge, daß die Nebenaggregate bei höheren Drehzahlen weit mehr Leistung aufnehmen als notwendig ist. Um diese Schwierigkeit zu beseitigen, hat man automatische Zweiganggetriebe der oben umrissenen Art vorgeschlagen. Diese gewährleisten, daß beim Überschreiten einer gewissen Drehzahl das Übersetzungsverhaltnis, mit welchem die entsprechenden Nebenaggregate angetrieben werden, heruntergeschaltet wird und beim Unterschreiten dieser Drehzahl das herabgesetzte Übersetzungsverhältnis wieder auf den vorherigen Wert erhöht wird. Dem Grunde nach wäre hier natürlich ein stufenloses Getriebe ideal. Dieses ist jedoch für den Einbau in einem Kraftfahrzeug zu aufwendig in der Herstellung, zu schwer und zu groß.

Man begnügt sich daher mit einem Zweiganggetriebe, das relativ klein, leicht und mit verhältnismäßig wenigen Bauelementen hergestellt werden kann. Aus der US-A-3,502,056 ist ein gattungsgemäßes Zweiganggetriebe für den Antrieb wenigstens eines Nebenaggregates, hier einer Wasserpumpe bzw. eines Ventilators eines Kraftfahrzeugverbrennungsmotors, bekannt. Dieses besteht aus einer Wasserpumpe, die mit einer Antriebswelle versehen ist, einer magnetischen Kupplung, die an dem Gehäuse der Wasserpumpe befestigt ist und die die Antriebswelle und ein Planetenradsystem umgibt, das ein Sonnenrad und eine Mehrzahl von Planetenrädern aufweist sowie ein äußeres Hohlrad, das über die unter Energie stehende magnetische Kupplung arretierbar ist. Die magnetische Kupplung kann manuell oder automatisch betrieben werden, wenn die Drehzahl niedrig ist, wobei sie das Hohlrad des Planetenradsystems arretiert. Auf diese Weise kan die von der Antriebswelle vorgegebene Drehzahl abgewandelt werden. Statt einer magnetischen Kupplung kann auch eine Flüssigkeitskupplung vorgesehen sein.

Ein vergleichbares Getriebe ist auch aus der FR-A-2,499,192 bekannt, das aus einem Planetenradgetriebe einer Reibungsbremsvorrichtung, einer Kupplung und einem hydraulischen System besteht, wobei das hydraulische System an die Verbrennungsmaschine und an die Reibungsbremse angeschlossen sind. Die Drehzahl kann hierbei über die Kombination aus der Reibungsbremse und dem Planetenradgetriebe im Zusammenhang mit dem hydraulischen System gesteuert werden.

Auch aus der GB-A-531,164 ist eine vergleichbare Vorrichtung zum Antrieb von Nebenaggregaten eines Kraftfahrzeugmotors bekannt. Die Vorrichtung kann mit der Nockenwelle der Verbrennungsmaschine verbunden sein. Sie weist einen Freilauf und ein Planetenradsystem auf. Wird der Freilauf arretiert, so wird die Antriebskraft über eine variierte Drehzahl auf eine Antriebswelle für eine Kühlung übertragen. Eine ebenfalls vorhandene Ölpumpe läuft über eine in der Hohlwelle angeordnete und gleichfalls über den Freilauf blockierbare Welle mit. Wird der Freilauf passiviert, so kann die Hohlwelle frei zur darin vorgesehenen Welle drehen und die Planetenräder des Planetenradsystems wirken regelnd auf die Antriebsdrehzahl ein.

Bei dem vorgenannten Stand der Technik sind jedoch einhellig separate Ölpumpen vorgesehen, deren Schaltelemente starkem Verschleiß ausgeliefert sind.

Aus der DE-A-29,38,356 ist eine Zahnradpumpe mit einem Regelventil bekannt, das auf eine für den Betrieb von vorgesehenen Nebenaggregaten günstigen Drehzahl anspricht und die entsprechende Drehzahl auch bei Drehzahlschwankungen der Brennkraftmaschine oberhalb dieser Drehzahl durch die Variation der Größe eines Durchströmquerschnitts eines Druckkanals der Pumpe selbsttätig ausgleicht und konstant hält. Das Sperrelement zur Steuerung des Durchströmquerschnitts wird dabei fliehkraftabhängig geregelt.

Bekannt ist schließlich ein automatisches Zweigang- oder Zweistufengetriebe, das auf der Tagung "Nebenaggregate im Fahrzeug" am 25./26. Februar 1988 in Essen vorgestellt wurde, bei welchem, wie dies auch bei der Erfindung bevorzugt wird, die Eingangswelle die Kurbelwelle des Motors oder eine Verlängerung derselben ist. Mit der Kurbelwelle drehfest verbunden ist das Hohlrad eines Planetengetriebes. Die Eingangswelle ist von einer drehfest am Motorgehäuse sitzenden Hülse umgeben, auf welcher mittels eines Freilaufes drehbar das Sonnenrad des Planetengetriebes gelagert ist. Der Planetenradträger des Planetengetriebes ist wiederum auf dieser Hülse drehbar gelagert und trägt außen die Abtriebseinrichtung wie z.B. eine Keilriemenrille. Der Planetenträger kann mittels einer mechanisch ein- und ausrückbaren Fliehkraftkupplung mit dem Sonnenrad verblockt werden. Bei niedriger Drehzahl des Motors ist die Lamellenkupplung zwischen dem Planetenträger und dem Sonnenrad geschlossen, so daß die als Abtrieb dienende Keilriemenscheibe mit der Motordrehzahl umläuft. Beim Erreichen einer bestimmten Drehzahl öffnet die Fliehkraftkupplung so, daß nunmehr der Planetenträger relativ zum Sonnenrad umlaufen kann. Jetzt treibt das mit der Eingangswelle starr verbundene Sonnenrad über die Planetenräder den Planetenträger an, so daß letzterer mit reduzierter Drehzahl umläuft. Beim Sinken der Drehzahl verläuft dieser Vorgang umgekehrt.

Bei Getrieben der durch die Erfindung verbesserten Art muß natürlich dafür gesorgt sein, daß das Heraufschalten des Übersetzungsverhältnisses beim Absinken der Drehzahl bei einer niedrigeren Drehzahl erfolgt als das Herunterschalten des Übersetzungsverhältnisses bei steigender Drehzahl, da anderenfalls die Kupplung in einem ganz engen Drehzahlbereich ständig herauf- und herunterschalten würde. Es ist also ein gewisser Hystereseeffekt erforderlich. Dieser soll bei dem Getriebe nach dem Stand der Technik durch die Reibung im Fliehkraftregler erzeugt werden.

Das eben erläuterte dem Oberbegriff des Anspruchs 1 entsprechende und auch andere bekannte ähnliche Getriebe weisen wesentliche Nachteile auf. Einer derselben liegt in dem mechanischen Schaltmechanismus, der verschleißanfällig ist. Dies ist außerordentlich nachteilig, da Getriebe der hier zur Diskussion stehenden Art sehr häufig schalten, weitaus häufiger als beispielsweise automatische Getriebe im Fahrzeugantriebsstrang. Ein weiterer Mangel liegt in der meist erforderlichen großen axialen Erstreckung, die insbesondere bei Einbau des Motors mit der Kurbelwelle in Fahrtrichtung so kurz wie irgend möglich sein sollte. Schließlich sind viele der bekannten Getriebe auch verhältnismäßig aufwendig im Bau.

Die Erfindung will diese und andere Mängel der vorbekannten automatischen Zweiganggetriebe beseitigen. Insbesondere löst sie die Aufgabe, ein Getriebe mit den Merkmalen des Oberbegriffs des Anspruchs 1 dahingehend weiterzubilden, daß dieses einfach im Aufbau, kurz in der axialen Baulänge, gering im Herstellungsaufwand und selbstverständlich einwandfrei arbeitend, also sicher schaltend ist und - das ist vor allem wesentlich - die Schaltvorgänge praktisch verschleißfrei ausführt.

Diese Aufgabe wird gemäß der Erfindung in ihrem breitesten Aspekt durch die Weiterbildung gemäß den kennzeichnenden Merkmalen des Anspruchs 1 gelöst. Als Flüssigkeit eignet sich z.B. ein Hydrauliköl, wie es z.B. in Lenkhilfepumpen verwendet wird.

Bei einer solchen Konstruktion, bei welcher der Zahnradsatz beispielsweise wie beim Stand der Technik als Planetengetriebe ausgebildet sein kann oder als Zahnringpumpe mit einem konzentrisch zur Eingangswelle des Getriebes angeordneten Ritzel, um welches ein entsprechend größerer innenverzahnter Zahnring rotieren kann, wird bei der Erfindung verschleißfrei geschaltet, da mittels des Fliehkraftschaltelements je nach Konstruktion der Zufluß zum Druckraum der Pumpe, der Abfluß aus diesem oder auch der Durchfluß durch die Pumpe blockiert werden kann, wodurch wiederum die als Zahnradpumpe zusammenwirkenden Zahnräder des Zahnradsatzes an der Relativdrehung zueinander gehindert und auf diese Weise verblockt werden bzw. zur Drehung freigegeben werden können. Durch dieses Verblocken des Zahnradsatzes kann je nach Konstruktion z.B. ein Getriebeglied gegen Drehung arretiert oder mit einem anderen umlaufenden Getriebeglied verbunden werden, so daß in Verbindung mit dem Freilauf zwei verschiedene Abtriebsdrehzahlen erreicht werden können. Bei dieser Art der Schaltung des Getriebes wird zwar immer ein gewisser Schlupf auftreten, da in der "hydrostatischen Pumpe" naturgemäß Spaltverluste auftreten. Dieser Schlupf ist in der Praxis jedoch völlig bedeutungslos und fällt als Nachteil nicht ins Gewicht. Dadurch, daß die Anordnung in einem konzentrisch zur Eingangswelle umlaufenden Gehäuse untergebracht ist, kann das ganze Hydrauliksystem mitrotieren und die Fliehkraftregelung wird erleichtert. Die praktisch verschleißfreie Ausbildung des Fliehkraftschaltelements wird dadurch erreicht, daß dessen bewegte Teile in der Hydraulikflüssigkeit normalerweise einem entsprechenden Öl liegen.

Der erfindungsgemäß ausgebildete Zahnradsatz kann je nach Konstruktion nur Teil des Fliehkraftschaltelementes oder aber sowohl Teil dieses Schaltelementes als auch Teil des der Drehzahlübersetzung dienendes Getriebes sein.

Der Abtrieb kann bei der Erfindung beispielsweise eine fest mit dem Gehäuse verbundene Riemenscheibe sein. Er kann aber auch von einer gesonderten Riemenscheibe oder einem derartigen Zahnrad und was dergleichen mehr ist, gebildet sein. Die Antriebswelle kann beispielsweise die Welle eines Drehkolbenmotors oder die Nockenwelle eines Kolbenmotors sein. Sie kann auch die Welle eines anderen mit proportional zur Motordrehzahl anzutreibenden Aggregates, wie z.B. der Kühlwasserpumpe des Motors sein. Bevorzugt ist die Eingangswelle des Getriebes jedoch die Kurbelwelle des Motors oder eine entsprechende Verlängerung.

Wie die später beschriebenen Beispiele zeigen, kann das Getriebe nach der Erfindung als geschlossenes kurzes auf der Eingangswelle sitzendes Aggregat ausgebildet sein, das vielfach sogar nachträglich an den Motor einer fertigen Konstruktion angefügt werden kann.

Wie oben bereits angedeutet kann bei einer bevorzugten Ausführungsform gemäß Anspruch 2 der Zahnradsatz vom Ritzel und Innenzahnring einer Zahnringpumpe gebildet sein, deren Saug- und Druckraum durch den Flüssigkeitskreislauf verbunden sind, welcher mittels der Ventilanordnung fliehkraftabhängig gedrosselt werden kann.

Im theoretisch einfachsten Fall sind der Saugraum und der Druckraum der Pumpe durch eine Kurzschlußleitung verbunden, in welcher ein fliehkraftabhängig betätigtes Absperrventil liegt. Wird dieses geschlossen, so baut sich im Druckraum hoher Druck auf, der ein Umlaufen der Pumpe verhindert. Man kann aber auch - wie das vielfach von Vorteil ist - im Flüssigkeitskreislauf gemäß Anspruch 2a hinter dem Druckraum der Pumpe einen zum Teil gasgefüllten Flüssigkeitsvorratsraum vorsehen, wobei dann das Fliehkraftschaltelement den Zufluß vom Flüssigkeitsvorratsraum zum Saugraum der Pumpe steuert.

Sieht man zwischen dem Druckraum und dem Flüssigkeitsvorratsraum einen hohen Durchflußwiderstand vor, so ist bei offenem Zufluß der Druck im Druckraum hoch und die Pumpe ist verblockt. Ist der Zufluß unterbochen, so kann die Pumpe nicht ansaugen, der Druck im Druckraum fällt über den hohen Strömungswiderstand ab und die Pumpe dreht "leer", also nur noch mit Gas gefüllt durch, ohne noch ein Drehmoment zu übertragen.

Die Zahnringpumpe kann vorzugsweise eine sogenannte Eaton-Pumpe sein, also eine solche, bei welcher der innenverzahnte Zahnring nur einen Zahn mehr aufweist als das Ritzel und alle Zähne gleichzeitig im Eingriff sind. Dem Grunde nach kann die Zahnringpumpe aber auch eine solche sein, bei welcher die Zähnezahldifferenz zwischen Ritzel und Zahnring größer als 1 ist und der dann entstehende sichelförmige Hohlraum gegenüber der Stelle tiefsten Zahneingriffs durch ein Füllstück ausgefüllt ist.

Bei der Ausführung nach Anspruch 2 oder 3 wird es bevorzugt, daß das Pumpenritzel gemäß Anspruch 4 konzentrisch zur Eingangswelle angeordnet ist, wobei die Zahnringlagerung exzentrisch im zur Eingangswelle konzentrisch gelagerten Zahnringpumpengehäuse ausgespart ist. Je nach der Konstruktion kann hierbei das Ritzel drehbar oder auch nicht drehbar angeordnet sein. Dem Grunde nach ist es aber auch möglich, das Ritzel exzentrisch, z.B. auf einem Exzenter der Abtriebswelle und den Zahnring konzentrisch zu lagern.

Bei einer ersten bevorzugten Ausführung der Erfindung sind gemäß Anspruch 4 zwei Abtriebselemente vorgesehen, von denen das eine über einen Freilauf unmittelbar von der Kurbelwelle antreibbar und das andere fest mit dem in diesem Falt drehbar gelagerten Ritzel der Zahnringpumpe verbunden ist, deren Gehäuse fest mit der Kurbelwelle verbunden ist. Dann kann bei offenem Flüssigkeitskreislauf der Zahnring mit dem Pumpengehäuse relativ zum Ritzel umlaufen, so daß das eine Antriebselement über den Freilauf von der Eingangswelle mitgenommen wird, während bei geschlossenem Flüssigkeitskreislauf das Pumpengehäuse das Ritzel mitnimmt und so ins Schnelle übersetzt.

Bei dieser Ausführung ist neben dem eigentlichen Getriebe noch eine zweite Welle erforderlich, auf welcher mit den beiden Abtriebselementen, die normalerweise als Riemenscheiben ausgebildet sind, zusammenwirkende Gegenelemente, also ebenfalls Riemenscheiben vorgesehen sind. Dabei muß die Riemenscheibe, die mit der kleineren Riemenscheibe, die direkt von der Kurbelwelle über den Freilauf angetrieben wird, gröber sein während die große Abtriebsriemenscheibe, die fest mit dem Ritzel verbunden ist, mit einer relativ kleinen Riemenscheibe auf der getriebenen Welle zusammenwirkt. Auf diese Weise wird die Umfangsgeschwindigkeit des Riemens auf der einen Riemenscheibe, die über den Freilauf angetrieben wird, immer dann die größere, wenn beim Absperren oder Drosseln des Flüssigkeitskreislaufs der Antrieb über die andere Abtriebsriemenscheibe erfolgt.

Diese Ausführung kommt mit insgesamt zwei Zahnrädern aus, was baulich einen wesentlichen Vorteil bedeutet.

Bei dieser Ausführung ist vorteilhaft gemäß Anspruch 6 das Zahnringpumpengehäuse auch das Getriebegehäuse, welches relativ zu beiden Abtriebselementen drehbar fest auf der Eingangswelle angeordnet ist.

Bei dieser soeben beschriebenen Ausführung ist die Ventilanordnung des Fleihkraftschaltelements bevorzugt nach den Ansprüchen 16 bis 20, insbesondere nach Anspruch 20 ausgebildet. Weitere wesentliche Merkmale und Vorteile dieser Ausführung ergeben sich aus dem weiter unten beschriebenen 1. Ausführungsbeispiel.

Bei einer zweiten bevorzugten Ausführungsform der Erfindung ist das Getriebe gemäß Anspruch 7 als Planetengetriebe ausgebildet, wobei dann eine Zahnringpumpe als zusätzliches Element bei Abbremsung durch Drosseln des Flüssigkeitskreislaufes das kleinere Zentralrad des Planetengetriebes abbremst oder zur Drehung freigibt. Aus diesem Grunde sitzt hier vorteilhaft die Zahnringpumpe zentral im Sonnenrad des Planetengetriebes und trägt mit ihrem Gehäuse, das hier also im Getriebegehäuse drehbar angeordnet ist, das Sonnenrad.

Hierbei ist vorteilhaft gemäß Anspruch 9 das Ritzel der Zahnradpumpe nicht drehbar, also z.B. am Motorgehäuse abgestützt, während das frei drehbar gelagerte Zahnringpumpengehäuse mit dem Sonnenrad fest verbunden ist.

EP 0 351 510 B1

Bevorzugt ist hierbei gemäß Anspruch 10 der fest mit dem Getriebegehäuse verbundene Abtrieb - in der Regel eine Riemenscheibe oder dergleich über einen Freilauf direkt von der Eingangswelle antreibbar, wobei dann der Planetenträger fest mit der Eingangswelle verbunden ist und das Hohlrad fest mit Getriebegehäuse.

Bei dieser zweiten bevorzugten Ausführungsform, die dem zweiten Beispiel entspricht, ist das Fliekraftventil der Ventilanordnung bevorzugt gemäß den Ansprüchen 21 bis 23, insbesondere Anspruch 22 ausgebildet.

Die Zahnringpumpe benötigt hierbei nicht einmal einen Auslaßkanal auf ihrer Druckseite, wenn man gemäß Anspruch 3 die Fliehkraftventilanordnung den Zustrom von Öl aus dem Getriebegehäuse in das Zahnringpumpengehäuse regeln läßt. Wird dann nämlich die Drosselöffnung im Flüssigkeitskreislauf geschlossen, so baut sich in der Zahnringpumpe der die Drehung derselben relativ zum Ritzel verhindernde Druck durch die unabänderlichen Spaltverluste sehr schnell ab und die Pumpe kann nun nur noch mit Öldampf bzw. Luft gefüllt umlaufen.

Bei der ersten bevorzugten Konstruktion, bei der die Keilriemenscheiben mit als Getriebeelemente ausgebildet sind, ist die Ventilanordnung vorzugsweise eine solche, die ein ausgesprochenes Hystereseverhalten zeigt, da das Absperrventil das bei steigender Drehzahl die Verbindung Pumpendruckraum Pumpensaugraum kurzschließt, diese Verbindung bei sinkender Drehzahl erst bei einer Drehzahl wieder unterbricht, die wesentlich niedriger ist als die Drehzahl, bei welcher sie die Kurzschlußleitung freigibt.

Bei der jetzt besprochenen Konstruktion mit der Drosselventilausbildung wird hingegen der Flüssigkeitskreislauf stetig gedrosselt, so daß sich der Übergang von einem Übersetzungsverhältnis auf das andere über einen relativ großen Drehzahlbereich von beispielsweise 200 bis 300 U/min erstreckt, so daß hier auf ein Hystereseverhalten verzichtet werden kann.

Wenn auch hier die Ausbildung mit dem Drosselventilschieber bevorzugt wird, so kann dem Grunde nach auch bei dieser Konstruktion eine Ventilanordnung beispielsweise nach Anspruch 20 vorgesehen sein.

Gemäß einer dritten bevorzugten Ausführungsform der Erfindung ist das Getriebe wie beim Stande der Technik ebenfalls als Planetengetriebe ausgebildet, wobei aber gemäß Anspruch 11 der Zahnradsatz von wenigstens zwei miteinander kämmenden Rädern des Planetengetriebes gebildet ist.

Hierbei wird es gemäß Anspruch 12 bevorzugt, daß zur Schaffung der "Zahnraudpumpe" ein Füllstück den Raum zwischen den Kopfkreisflächen der kämmenden Räder des Zahnradsatzes dort, wo deren Verzahnungen aufeinander zulaufen, bis auf eine Druckkammer nahe dem Eingriffsbereich derselben ausfüllt. Hierbei wirken also die Zahnlücken der beiden miteinander kämmenden Räder in den Bereichen vor dem Eingriffsbereich als Flüssigkeitstransportkammern der Pumpe. Hierbei erfolgt dann die Abbremsung bzw. Freigabe der miteinander kämmenden Planetengetrieberäder durch Steuerung eines Zuflußkanals zum Einzugsbereich der so gebildeten Zahnradpumpe oder aber eines Abflußkanals aus der Druckkammer.

Bevorzugt bilden hierbei gemäß Anspruch 13 das Sonnenrad und wenigstens ein Planetenrad den Zahnradsatz bzw. die Zahnradpumpe. (Bevorzugt wird hier natürlich eine symmetrische Anordnung, bei welcher mehrere Planetenräder gleichmäßig über den Umfang verteilt nach Art einer Zahnradpumpe zusammenwirken). Das hat den Vorteil, daß die Fliehkraft die Flüssigkeit von außen in die Zahnlücken der Planetenräder drückt, solange der Flüssigkeitsstand im Getriebegehäuse so groß ist, daß die äußeren Bereiche der Planetenräder noch eintauchen.

Hier ist das Planetengetriebe vorteilhaft als sogenanntes Plusgetriebe ausgebildet, also so, daß jedes Planetenrad mit einem anderen Planetenrad und einem Zentralrad kämmt. Dadurch wirken die mit dem Hohlrad zusammenwirkenden Planetenräder als Zulieferer für das Sonnenrad, wenn das Füllstück auch die Kopfkreisflächen der letzteren abdeckt. Das Planetengetriebe ist hier ein Reduziergetriebe, also ein solches, das die abgegebene Drehzahl verringert.

Bei dieser dritten Ausführung wird also jeweils das Planetengetriebe dadurch blockiert, daß in der Druckkammer durch die Pumpwirkung ein Druck aufgebaut wird, der das Getriebe blockiert. Dabei ist die Steuerung durch die Fliehkraftventilanordnung vorteilhaft gemäß einem der Ansprüche 16 bis 20, vorzugsweise gemäß Anspruch 19 ausgebildet. Hierbei wird durch Öffnen des Absperrventils der Druckraum drucklos gemacht, die Zahnräder laufen jedoch im wesentlichen ständig in der im Getriebegehäuse befindlichen Ölfüllung um, welche (bei rotierendem Gehäuse natürlich) den äußeren Innenringraum des Gehäuses bis wenigstens über die Achsen der Planetenräder hinaus, aber höchstens bis zum Kopfkreis des Sonnenrades füllen sollte.

Bei dieser Konstruktion laufen also die Zahnräder des Planetengetriebes bei reduzierter Drehzahl, also im oberen Drehzahlbereich des Motors lastübertragend im Ölbad um.

Will man die hierdurch auftretende Wärmeverluste beseitigen, so ordnet man vorteilhaft gemäß Anspruch 14 das Planetengetriebe in einem im Getriebegehäuse umlaufenden geschlossenen Innengehäuse an, dessen Flüssigkeitszulauf mittels der Ventilanordnung absperrbar ist und welches über geringfügige Drosseldurchlässe durch die Pumpenwirkung entleerbar ist. Auf diese Weise arbeitet das Planetengetriebe, wenn es nicht blockiert ist, nur mit einem minimalen Ölinhalt, der aber für die erforderliche Schmierwirkung ausreicht.

Bei dieser vierten bevorzugten Ausführung der Erfindung ist die Ventilanordnung vorzugsweise eine solche nach einem der Ansprüche 21 bis 23 vorzugsweise nach Anspruch 23.

Allgemein gilt für die Ventilanordnung des Fliehkraftschaltelementes, daß gemäß einer bevorzugten Ausführung ein an den Flüssigkeitskreislauf im mit der Eingangswelle rotierenden Gehäuse angeschlossenes Fliehkraftventil durch die Fliehkraft gegen Federkraft verlagerbar im Pumpengehäuse gelagert ist und den Durchfluß im Kreislauf steuert. Diese Ausführungsform ist vorteilhaft gemäß einem der Ansprüche 16 bis 20 weitergebildet. Eine solche Ausbildung bietet den wesentlichen Vorteil, daß der das Absperrventil in seine den Flüssigkeitskreislauf kurzschließende Position bewegende Flüssigkeitsdruck, der also das Getriebe "heraufschaltet", niedriger ist als der Druck, der das Flüssigkeitsgetriebe herunterschaltet, so daß hier eine ausgesprochene Hysteresewirkung entsteht. Ein stetiger Übergang wird mit der Ventilausbildung nach den Ansprüchen 21 bis 23 erreicht, die wiederum andere bevorzugte Ausführungsformen kennzeichnen.

Eine besonders vorteilhafte Ausführung des Fliehkraftschaltelements mit stetigem Übergang ist in den Ansprüchen 24 bis 26 gekennzeichnet. Diese erlaubt auch einen besonders einfachen Aufbau des Planetengetriebes mit einfachen Planetenrädern. Dem Grunde nach, z.B. bei direktem Antrieb des Planetenträgers durch die Kurbelwelle kann der Verdrängungskörper schwerer als die Flüssigkeit sein, so daß beim Überschreiten der Schaltdrehzahl der Zufluß zum Saugbereich eingeleitet wird. Bevorzugt wird jedoch die Ausbildung nach Anspruch 25 und 26, bei der bei Überschreiten der Schaltdrehzahl der Zufluß zum Saugbereich verhindert wird. Hierbei ist dann vorteilhaft das Gehäuse fest mit der Kurbelwelle verbunden, während die Abtriebsscheibe fest mit dem Planetenträger verbunden ist und das Sonnenrad über einen Freilauf gegen das Gehäuse abgestützt ist.

Nachfolgend sind anhand der Zeichnungen als Ausführungsbeispiele fünf bevorzugte Ausführungsformen des Getriebes gemäß der Erfindung beschrieben, aus denen weitere Vorteile und Eigenschaften der Erfindungen ersichtlich sind.

Fig. 1 zeigt das Getriebeschema einer ersten Auführungsform, bei welcher die Geschwindigkeitsänderung über Riemenscheiben erfolgt.

Fig. 2 zeigt einen Axialschnitt durch die wesentlichen Teile des Getriebes gemäß Fig. 1.

Fig. 3 zeigt den Schnitt III - III aus Fig. 1.

Fig. 4 zeigt den Schnitt IV - IV aus Fig. 1.

Fig. 5 zeigt das Getriebeschema einer zweiten Ausführungsform, bei welcher eine Zahnringpumpe zum Blockieren des Sonnenrades eines Planetengetriebes dient.

Fig. 6 zeigt den Axialschnitt durch das Getriebe nach Fig. 5.

Fig. 7 zeigt den Schnitt VII - VII aus Fig. 6.

Fig. 8 zeigt das Getriebeschema einer dritten Ausführungsform, bei welcher Planetenräder und Sonnenrad des Planetengetriebes nach Art einer Zahnradpumpe zusammenwirken.

Fig. 9 zeigt den Axialschnitt durch das Getriebe gemäß Fig. 8 gemäß dem Schnitt IX - IX in Fig. 10.

Fig. 10 zeigt den Schnitt X - X aus Fig. 9.

Fig. 11 zeigt den Schnitt XI - XI aus Fig. 9.

Fig. 12 zeigt das Getriebeschema einer vierten Ausführungsform, bei welcher ebenfalls das Sonnenrad und Planetenräder des Planetengetriebes als Zahnradpumpe zusammenwirken.

Fig. 13 zeigt den Axialschnitt durch das Getriebe gemäß Fig. 12, wobei der Schnitt gemäß der Linie XIII - XIII in Fig. 15 geführt ist.

Fig. 14 zeigt den Schnitt XIV - XIV durch Fig. 13.

Fig. 15 zeigt den Schnitt XV - XV durch Fig. 13.

Fig. 16 zeigt einen Axialschnitt durch eine weitere besonders günstige Ausführungsform des Getriebes nach der Erfindung.

Fig. 17 zeigt den Schnitt XVII - XVII aus Fig. 16.

Fig. 18 zeigt den Schnitt XVIII - XVIII aus Fig. 16.

Fig. 19 zeigt das Schema des Getriebes nach Fig. 16 bis 18.

In den Getriebeschemen ist jeweils die Blockierstelle durch ein liegendes V gekennzeichnet.

Bei der nachfolgenden Beschreibung der verschiedenen Ausführungsformen sind die Getriebenschemen nicht gesondert beschrieben, da die übrige Beschreibung auf diese ebenfalls zutrifft und sie ausreichend erläutert.

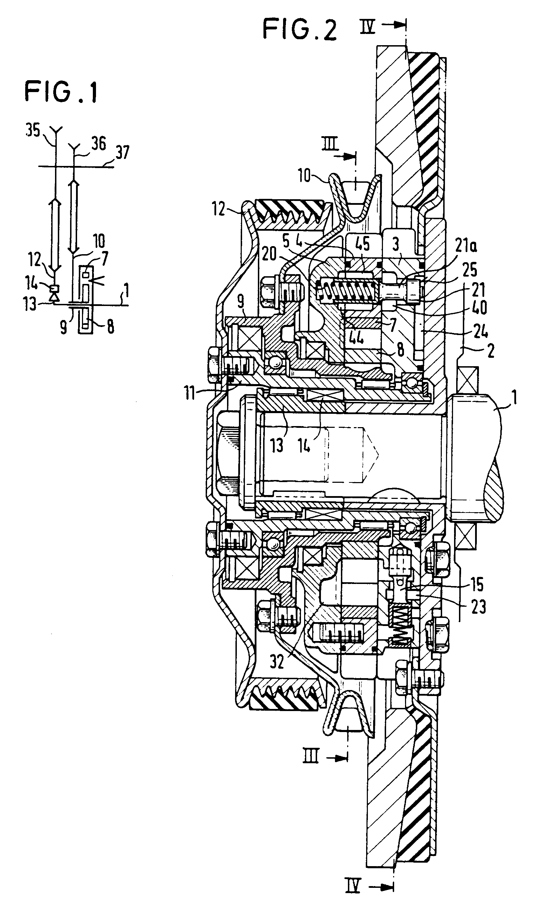

Das in den Figuren 1 bis 4 dargestellte Getriebe ist ein rückkehrendes Riemengetriebe als Hochtrieb mit einer ein ausgesprochenes Hystereseverhalten zeigenden Druckdrosselregelung in dem eine hydrostatische Kupplung bildenden Fliehkraftschaltelement.

Wie aus Fig. 2 ersichtlich, ist am der Antriebskupplung des nicht gezeigten Motors gegenüberliegenden Ende der Kurbelwelle 1 eines Kolbenverbrennungsmotors ein Flansch 2 verdrehfest befestigt, welcher wiederum das Gehäuse einer Zahringpumpe trägt. Das Pumpengehäuse bildet hier zugleich das Getriebegehäuse.

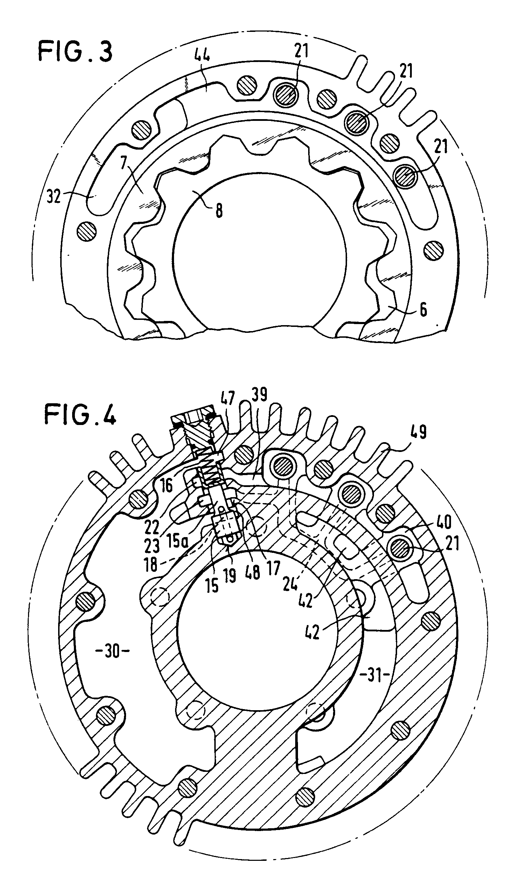

Es besteht aus zwei Stirnplatten 3 und 5 und einem Mantelring 4, welcher die Platten 3 und 5 auf Abstand hält und so zwischen ihnen den Pumpenhohlraum ausspart. Das Pumpengehäuse ist hier also starr an der Kurbelwelle befestigt und läuft mit deren Drehzahl um. Im Mantelring 4 des Pumpengehäuses ist ein Zahnring oder Hohlrad 7 frei drehbar gelagert. Das innen verzahnte Hohlrad 7 kämmt mit einem Ritzel 8 und wirkt mit diesem nach Art einer sogenannten Eaton-Pumpe zusammen (Fig. 3).

In Fig. 4 erkennt man links die in der Stirnplatte 3 ausgesparte Saugkammer 30 der Pumpe und rechts die in der gleichen Kammer ausgesparte Druckkammer 31. Beide Kammern können Ergänzungen in der gegenüberliegenden Stirnplatte 5 aufweisen, wie dies bei 32 in Fig. 2 gezeigt ist. Eine Kurzschlußverbindung von der Druckkammer 31 zur Saugkammer 30 kann mittels der später erläuterten drei Ventile 21 abgesperrt werden (Fig. 2 und 4).

Das Ritzel 8 der Pumpe, das mit dem Zahnring 7 derselben kämmt, sitzt drehfest auf einer Abtriebshülse 9, welche eine größere Keilriemenscheibe 10 trägt und frei dehbar auf der Hohlwelle 11 gelagert ist. Die Hohlwelle 11 selbst trägt eine zweite Keilriemenscheibe, die hier als Vielkeilriemenscheibe 12 ausgebildet ist, und ist ihrerseits mittels eines Freilaufes 14, der es ihr erlaubt, die Kurbelwelle 1 zu überholen, auf einer Lagerhülse 13 drehbar gelagert, welche Ihrerseits verdrehfest an der Kurbelwelle 1 befestigt ist. Erfolgt der Abtrieb bei geschlossener hydrostatischer Kupplung, also bei blockiertem Flüssigkeitsumlauf durch die Zahnringpumpe 7, 8 über die Keilriemenscheibe 10, so läuft wegen der aus Fig. 1 ersichtlichen Dimensionierung der wirksamen Umfänge der Vorgelegeriemenscheiben 35 und 36 die Riemenscheibe 12 schneller als die Kurbelwelle, so daß der Freilauf 14 abhebt und nun ein Hochtrieb erfolgt, d.h. die die Riemenscheiben 35 und 36 tragende getriebene Welle 37 läuft jetzt schneller als die Kurbelwelle 1.

Wird die hydrostatische Kupplung geöffnet, also der Flüssigkeitsstrom durch die den Druckraum 31 und den Saugraum 30 der Pumpe verbindende Kurzschlußleitung freigegeben, dann kann über das Pumpengehäuse 3, 4, 5 und die Pumpenzahnräder 7, 8 kein nennenswertes Drehmoment mehr auf die Riemenscheibe 10 übertragen werden. Jetzt wird das Drehmoment von der Kurbelwelle direkt über den Freilauf 14, der nun die Riemenscheibe 12 mitnimmt, auf die Abtriebswelle 37 übertragen. Jetzt laufen die Nebenaggregate des Motors, wie dies für den Hauptbetriebsbereich des Motors erwünscht ist, entsprechend den gewählten Übersetzungsverhältnissen langsamer um.

Das Öffnen der hydrostatischen Kupplung, also die Freigabe der Kurzschlußleitung, erfolgt zweckmäßig bei einer Motorendrehzahl, die über der Leerlaufdrehzahl, aber noch unter dem für den normalen Motorbetrieb in Frage kommenden Drehzahlbereich liegt.

Nachfolgend wird die hydraulische Ventilanordnung beschrieben, die fliehkraftgesteuert das Absperrventil 21 im Kurzschlußkreislauf der Zahnringpumpe 7,8 öffnet und schließt.

Zu diesem Zweck ist in einer Radialbohrung in der Pumpenstirnplatte 3 radial verschiebbar ein Fliehkraftventilkolben 15 gelagert. Dieser Ventilkolben 15 ist in Fig. 2 um etwa 130° versetzt eingezeichnet, damit seine Lage auch im Axialschnitt erkennbar ist. Die tatsächliche Lage entspricht der aus Fig. 4 ersichtlichen.

Der Ventilkolben 15 steht einerseits bei umlaufender Kupplung unter dem Einfluß der Fliehkraft, welche bestrebt ist, ihn radial nach außen zu drücken und andererseits unter dem Einfluß einer Druckfeder 16, die bestrebt ist, ihn radial nach innen in die in Fig. 2 und 4 gezeigte Lage zu drücken.

Wie aus Fig. 4 und 2 ersichtlich, ist die den Fliehkraftkolben 15 führende Bohrung durch vier Ringkammern erweitert. Die radial äußerste Ringkammer 47 und die radial innerste Ringkammer 48 sind, wie aus Fig. 4 erkennbar, mit dem dort links liegenden Saugraum 30 der Pumpe verbunden.

Die radial äußere 22 der beiden mittleren Ringkammern 22 und 23 ist, wie ebenfalls aus Fig. 4 ersichtlich, über den Kanal 39 mit drei Ringkammern 40 verbunden, die jeweils in der aus Fig. 2 ersichtlichen Weise den Absperrventilkolben 21 umgeben und über Kanäle, deren Öffnungen in den Druckraum 31 bei 42 in Fig. 4 gezeigt sind, mit letzterem verbunden sind.

Die letzte Ringkammer 23 umgibt ebenfalls den Fliehkraftventilkolben 15 und ist über eine Leitung 24, die sich in drei Zweigleitungen aufteilt und in Fig. 4 gestrichelt eingezeichnet ist, mit Flüssigkeitsräumen vor den in Fig. 2 rechten Stirnflächen 25 der Absperrventilkolben 21 verbunden, wie dies am besten aus Fig. 2 ersichtlich ist.

Im Fliehkraftkolben 15 ist eine Axialbohrung 18 mit radialen Auslässen an ihren beiden Enden vorgesehen, so daß der im Bereich des Halses 15a des Kolbens 15 herrschende Flüssigkeitsdruck auch immer auf die radial innere Stirnfläche des Fliehkraftkolbens 15 wirkt. Die radial äußere Stirnfläche des Fliehkraftkolbens 15, die unter dem Druck der Feder steht, steht ferner durch den äußersten Ringraum 47, der mit dem Saugraum 30 der Pumpe verbunden ist, ständig unter dem im Pumpensaugraum herrschenden Druck.

Der Absperrventilkolben 21 wird (Fig. 2) durch die Feder 20 ständig nach rechts gedrückt. Der den Hals 21a des Absperrventilkolbens 21 umgebende Ringraum 40 steht unter dem vollen Druck des Druckraumes, während eine die linken federbelastete Stirnfläche des Absperrkolbens 21 umgebende Ringkammer 45 unter dem Druck des Saugraumes, also dem Niederdruck steht. Zu diesem Zweck ist der Saugraum 30 der Pumpe über die in der linken Pumpenstirnplatte 5 angeordnete Ausnehmung 44 (Fig. 2 und 3) mit den Ringräumen 45 verbunden.

Solange der Motor mit relativ niedriger Drehzahl umläuft, befindet sich der Fliehkraftkolben 15 in der in Fig. 2 und 4 gezeigten Lage. Das heißt, alle den Fliehkraftkolben 15 umgebenden Ringkanäle mit Ausnahme des in Fig. 4 radial von außen zweiten Ringkanals 22 stehen lediglich unter dem Saugdruck der Pumpe. Der im Ringkanal 22 herrschende Hochdruck der Pumpe kann so keine Wirkung ausüben. Der Durchfluß an der Steuerkante 17 des Ringraums 48 vorbei zwischen dem Kanalsystem 24 mit dem Ringraum 23 und dem Saugteil der Pumpe ist ungehindert. Auf den Kolben 15 wirken also nur von außen und innen der Saugdruck der Pumpe und die Kraft der Feder 16 und die Fliehkraft. Der Absperrventilkolben 21 wird in dieser Lage durch die Feder 20 geschlossen gehalten, da die beiden unter dem Druck der Hochdruckkammer 40 stehenden ringförmigen Kolbenstirnflächen des Kolbens 21 gleich groß sind und somit der Hochdruck keine Wirkung ausüben kann und im Raum 45 und dem Raum für die Feder 20 durch eine kleine entsprechende Radialbohrung immer der Niederdruck der Pumpe herrscht, der sich auch im Bereich der Kanäle 24 befindet. Da also die Kurzschlußleitung geschlossen ist, herrscht ein hoher Druck im Druckraum der Pumpe, welcher eine Relativdrehung zwischen Pumpengehäuse mit Innenzahnring 7 einerseits und Pumpenritzel 8 andererseits verhindert. Der Antrieb der Nebenaggregate erfolgt also über die Riemenscheibe 10.

Wird nun die Motordrehzahl gesteigert bis zu der vorgegebenen Schaltdrehzahl, so wird der Fliehkraftkolben 15 langsam durch die Fliehkraft gegen die Kraft der Feder 16 radial nach außen gedrückt, bis bei Erreichen der Schaltdrehzahl der Fliehkraftkolben 15 als erstes den Durchlass bei der Steuerkante 17 (Fig. 2 und 4) schließt. Wird die Drehzahl weiter gesteigert, so gibt der Hals 15a des Kolbens 15 die Verbindung vom Hochdruckringraum 22 zum Steuerringraum 23 frei. Nun wird der Hochdruck der Pumpe zugleich über den Kanal 18 in den Raum vor der radial inneren Stirnfläche des Kolbens 15 geleitet, so daß der Kolben jetzt schlagartig radial nach außen in seine äußere Anschlagstellung wandert. Diese Schaltung erfolgt somit sehr präzise und energisch und gestattet keine instabile Grauzone der Schaltdrehzahl. Über den Ringraum 23 und die Kanalanordnung 24 wandert jetzt der Hochdruck der Pumpe in die Räume vor den in Fig. 2 rechten Stirnflächen 25 der drei Absperrkolben 21 und schiebt rasch und sicher die drei Absperrkolben 21 in Fig. 2 nach links gegen die Wirkung der Feder 20. Damit wird bei den drei Absperrventilen jeweils eine großflächige Verbindung zwischen den Ringräumen 45 und 40 (Fig. 2) geschaffen, so daß nun ein starker Flüssigkeitsstrom vom Druckraum 31 über die Öffnungen 42 in die Ringräume 40, von diesen in die Ringräume 45 und von diesen über die aus Fig. 3 ersichtliche Kanalanordnung 44 in den Saugraum 30 strömen kann. Die Zahnradpumpe kann jetzt kein Drehmoment mehr übertragen; der Freilauf wird wirksam und die Abtriebswelle 37 wird nun mit entsprechend verminderter Drehzahl angetrieben.

In diesem Zustand bei hoher Drehzahl des Motors wirkt auf die in Fig. 2 rechte Stirnfläche 25 des Absperrkolbens 21 immer noch ein verbleibender Staudruck, da die Pumpe ja jetzt mit der Differenzdrehzahl zwischen der Riemenscheibe 10 und der Riemenscheibe 12 Öl fördert. Dieser Staudruck ist natürlich weitaus niedriger als der zur Drehmomentübertragung erforderliche Stützdruck, so daß die Feder 20 bestrebt ist, jetzt das Absperrventil in Fig. 2 wieder nach rechts zu schieben und so zu schließen. Die Feder 20 muß also relativ schwach ausgelegt sein, so daß Sie nicht in der Lage ist, diesen Staudruck zu überwinden. Erst wenn durch weiter abnehmende Drehzahl die Feder 16 das Fliehkraftventil 15 wieder radial nach innen schiebt und hierbei die Verbindung vom Ringkanal 22 zum Ringkanal 23 schließt, fällt der Staudruck in der Leitung 24 wieder auf den Saugdruck der Pumpe ab, da jetzt der Ringkanal 23 des Fliehkraftventils wieder mit dem Saugraum der Pumpe verbunden ist und beim Absperren der Verbindung vom Druckraum zum Saugraum im Bereich des Fliehkraftventils durch die Bohrung 18 der bis dahin auf die innere Stirnfläche des Kolbens 15 wirkende Staudruck nun ebenfalls wieder auf den Saugdruck der Pumpe abfällt. Da der Staudruck stets höher ist als der Saugdruck, liegt die Drehzahl, bei welcher das Fliehkraftventil wieder zurückschaltet und die Kurzschlußleitung unterbricht, niedriger als die Drehzahl, bei welcher das Fliehkraftventil 15 die Kurzschlußleitung freigegeben hat, da ja auf die Stirnfläche 19 des Fliehkraftkolbens noch so lange der Staudruck wirkt, bis die Federkraft 16 nicht nur die Fliehkraft, sondern auch noch zusätzlich die Kraft des Staudrucks überwinden kann.

Auf diese Weise wird also das Herunterschalten der Drehzahl der Welle 37 bei einer wesentlich höheren Motordrehzahl erfolgen als das Wiederheraufschalten der Drehzahl der Abtriebswelle. Der so geschaffene Hystereseverlauf des Steuerungsverhaltens verhindert ein unerwünscht häufiges Hin- und Herschalten des dargestellten Getriebes.

Da bei dieser Konstruktion bei hoher Drehzahl große Ölmengen umgewälzt und damit aufgeheizt werden, muß durch entsprechende Kühlrippen 48 relativ viel Verlustwärme abgeführt werden. Daher eignet sich diese Bauweise in erster Linie für niedertourige Motoren, wie z.B. LKW-Motoren. Auf der anderen Seite bringt diese Bauweise erhebliche Vorteile mit sich.

So weist die sehr robuste Konstruktion keine Lebensdauerprobleme auf, da das "Getriebe" sich aus Keilriemen zusammensetzt, die leicht ersetzt werden können. Auch können die mechanischen Verluste des "Hochtrieb-Getriebes" problemlos weggekühlt werden, da die Keilriemen eine große Oberfläche besitzen und dem Luftstrom ausgesetzt sind. Ferner hat der Motorenkonstrukteur weitestgehende Freiheiten, den Übersetzungssprung zu wählen. Auch besteht durch die vorhandenen zwei Riemenscheiben die Möglichkeit, die Aggregate aufzuteilen. Ein Teil der Aggregate kann vom Schmalkeilriemen direkt angetrieben werden.

Bei geschlossener hydrostatischer Kupplung läuft diese Riemenscheibe 1 : 1 mit der Kurbelwelle. Bei geöffneter Kupplung dagegen läuft diese Riemenscheibe langsamer als die Kurbelwelle. Somit wird die Drehzahl der von Schmalkeilriemen angetriebenen Aggregate reduziert. Ein zweiter Teil der Aggregate, beispielsweise der Generator und der Lüfter, wird vom Flachriemen (Vielkeilriemen) angetrieben. Diese Aggregate laufen dann bei geschlossener hydrostatischer Kupplung schneller, weil der Flachriemen schneller läuft, als es der Kurbelwelle entspricht. Bei geöffneter Kupplung wird diese Drehzahl reduziert auf Kurbelwellendrehzahl, da der Kraftfluß nunmehr über den Freilauf von der Kurbelwelle direkt auf die Flachriemenscheibe läuft. Wie groß jeweils der Drehzahlsprung ist, hängt von der Gestaltung des Vorgeleges ab, das ja hier unbedingt notwendig ist. Dieses Vorgelege kann zugleich eine Aggregatewelle sein und kann vom Motorenkonstrukteur beliebig ausgebildet werden. Natürlich laufen alle Aggregate bei geöffneter Kupplung um den gleichen Sprung langsamer als bei geschlossener Kupplung. Man kann auf diese Weise die Größe der Riemenscheiben an den Aggregaten auf bestgeeignete Drehzahlangleichung an den Leistungsbedarf des einzelnen Aggregates und somit auf dessen Gesamtwirkungsgrad und auf kleinstmöglichen Platzbedarf im Gesamtkonzept optimieren. Schließlich haben die Keilriemen sehr gute Dämpfungseigenschaften auf den Aggregateantrieb und auch auf die Kurbelwellen-Drehschwingungen. Ferner erzeugen sie keine Geräuschprobleme.

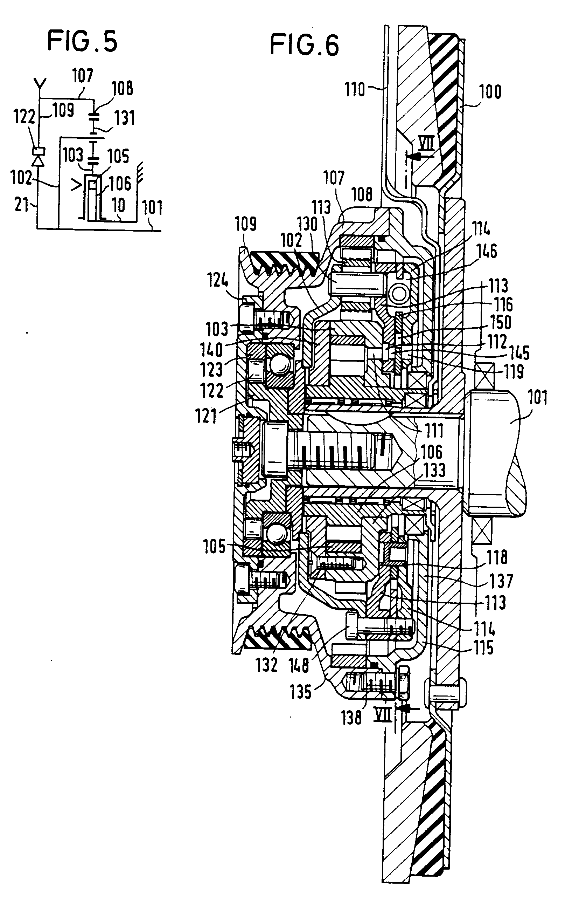

Das in Fig. 5 bis 7 gezeigte zweite Ausführungsbeispiel stellt ein erfindungsgemäßes Zweiganggetriebe als Hochtrieb dar, bei welchem die Drehzahl nur eines Abtriebselements dadurch geregelt wird, daß mittels einer Zahnringpumpe das Sonnenrad eines Planetengetriebes festgehalten bzw. freigegeben wird.

Auch hier ist die Eingangswelle des Getriebes die Kurbelwelle 101 des Motors. Mit dieser ist der Planetenträger 102 eines Planetengetriebes drehfest verbunden.

Auf einer vorderen Verlängerung der Kurbelwelle 101 sitzt, wie aus Fig. 6 ersichtlich, der Schwingungsdämpfer 100 des Verbrennungsmotors, der mit einem Kragen auf das im Durchmesser verringerte Ende der Kurbelwelle drehfest aufgesetzt ist.

Der mit der Kurbelwelle drehfest verbundene Planetenträger 102 trägt auf Planetenlagerzapfen 130 drei Planetenräder 131 gleichmäßig über den Umfang verteilt.

Die Planetenräder 131 kämmen außen mit dem Hohlrad 108, das drehfest im Gehäuse 135 des Getriebes angeordnet ist, das wiederum einstückig mit der Riemenscheibe 109 ausgebildet ist. Das Getriebegehäuse 135 ist über einen Freilauf 122 drehbar auf einem Innenring 121 des Freilaufes gelagert, welcher wiederum fest mit dem Stirnende der Kurbelwelle verbunden ist. Der Freilauf 122 erlaubt es dem Gehäuse 135 mit der Riemenscheibe 109 die Kurbelwelle zu überholen, die anderenfalls unmittelbar über den Freilauf die Riemenscheibe 109 mit dem Gehäuse antreibt.

Das Gehäuse 135 besteht im Wesentlichen wie aus Fig. 6 ersichtlich, aus einem linken Gehäuseteil 107 und einem rechten Gehäuseteil 137, die mittels der Schrauben 138 verbunden sind.

Auf dem Kragen des drehfest mit der Kurbelwelle 101 verbundenen Schwingungsdämpfers 100 sitzt mittels Nadellagern drehbar gelagert das Ritzel 106 einer Zahnringpumpe. Das Ritzel 106 sitzt wie auf der Zeichnung ersichtlich mit einer zentralen Hülse auf den Nadellagern. Die zentrale Hülse des Ritzels 106 ist über eine Drehmomentstütze 110 mit dem nicht gezeigten Motorgehäuse verbunden, so daß das Ritzel 106 drehfest angeordnet ist. Außen auf dem in Fig. 6 rechts in Axialrichtung das Ritzel 106 überragenden Teil der Hülse des Ritzels ist drehbar eine Stirnplatte 133 des Pumpengehäuses gelagert, die einstückig mit dem Sonnenrad 103 ausgebildet ist, welches zugleich die Umfangswandung des Pumpengehäuses darstellt. Die in Fig. 6 linke Stirnwand des Pumpengehäuses ist durch eine ebenfalls auf der Hülse des Ritzels 106 gelagerte Ringplatte 140 gebildet, die durch Schrauben 132 mit dem Sonnenrad wie in Fig. 6 unten ersichtlich, verschraubt ist. Die innere Umfangswandung des Pumpengehäuses 140, 133 verläuft exzentrisch zum Ritzel und der Drehlagerung des Gehäuses auf der Ritzelhülse. Auf ihr ist der Zahnring 105 der Zahnringpumpe mit seiner Umfangsfläche gelagert.

Die Zahnringpumpe besitzt auf ihrer Druckseite keine Auslaßkanäle, sondern lediglich im Bereich ihres Saugraumes einen oder mehrere Zufuhrkanäle 111, über welche ein Befüllen der Pumpe aus einem Ringkanal 112 möglich ist. Die Entleerung der Pumpe erfolgt lediglich durch Spaltverluste. Der Ringkanal seinerseits sitzt in einer die in Fig. 6 rechte Stirnseite des Pumpengehäuses abdeckenden, vom Planetenträger 102 getragenen Platte 113, die also mit dem Planetenträger umläuft. Mittels der Schrauben 148 ist am Planetenträger und der Platte 113 ferner über Distanzbleche 115 eine Ventilplatte 114 mit dem Planetenträger verschraubt. Die Ventilplatte 114 besitzt Öldurchlaßbohrungen 119, welche den Ringkanal 112 in der Platte 113 mit dem Innenraum des Getriebegehäuses außerhalb der Zahnringpumpe über kurze Verlängerungskanäle 145 verbinden.

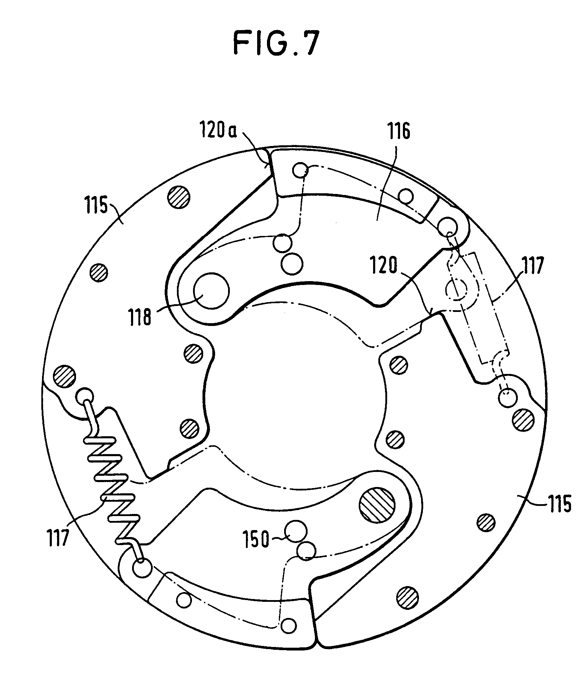

Die Form und der Distanzbleche 115 ist aus Fig. 7 ersichtlich. Diese im Ausführungsbeispiel 2 Distanzbleche lassen zwischen sich und der Platte 113 und der Ventilplatte 114 entsprechende Räume frei, in denen zwei Ventilschwingen 116 angeordnet sind, welche in Axialrichtung den Raum zwischen den Platten 113 und 114 ausfüllen. Die Ventilschwingen sind jeweils um Lagerzapfen 118 schwenkbar gelagert, Zugfedern 117, die in den Hohlräumen 146 angeordnet sind, sind mit ihrem einen Ende an den Distanzblechen 115 und mit ihrem anderen Ende am der Lagerung 118 abgewandten Ende der Schwingen 116 befestigt. Die Form der Schwingen ist aus Fig. 7 ersichtlich. In deren unter dem Einfluß der Zugfedern 117 radial inneren Position liegen Ventildurchlässe 150 der Schwingen 116 in Überdeckung mit den Kanälen 119 und 145, sodaß in dieser Lage der Durchtritt von Öl aus dem Innenraum des Getriebegehäuses in den Saugraum der Zahnringpumpe möglich ist.

In Fig. 7 sind die Schwingen jedoch in ihrer unter dem Einfluß der Fliehkraft gegen die Federkraft nach außen geschwenkten Lage voll ausgezogen dargestellt, in welcher die Durchlässe 150 nicht mehr mit den Durchlässen 119 und 145 fluchten und so die Durchlässe in den Saugraum der Pumpe absperren.

Bei diesem Getriebe handelt es sich also um ein Zweiganggetriebe als Hochtrieb, das als Planetengetriebe ausgebildet ist, dessen Sonnenrad mittels der Zahnradpumpe festbremsbar ist.

Das Gehäuse des Getriebes ist soweit mit Flüsigkeit gefüllt, daß mindestens ein Volumen noch frei ist, welches dem freien Innenraum der Zahnringpumpe enspricht, die Füllung muß andererseits mindestens so groß sein, daß bei Öl leerer Zahnradpumpe und umlaufendem Getriebe der zylindrische Flüssigkeitsspiegel den Einlaßkanal 119 in der Ventilplatte 114 noch bedeckt und die radialäußere Kante dieses Einlasses erst dann nach außen überschreitet, wenn der Innenraum der Zahnringpumpe vollständig mit Öl gefüllt ist.

Wird der Innenzahnradpumpe kein Öl zugeführt, weil die Ventilschwingen 160 die Einlaßkanäle 111 sperren, so entsteht lediglich in der Luft und/oder dem Öldampf in der Pumpe eine kein nennenswertes Drehmoment ausübende geringe Druckdifferenz. Die Pumpe kann also umlaufen und kein Drehmoment übertragen. Zur Schmierung der Zahnräder ist es zweckmäßig, daß in diesem Betriebszustand eine gewisse Schmierölmenge umgewälzt wird und zwar durch Undichtigkeiten im Saugdrosselsystem. Insoweit liegen keine Probleme vor.

Dreht der Motor mit niedriger Drehzahl, bei welcher ein Antrieb der Nebenaggregate mit hoher Geschwindigkeit erfolgen soll, also unter dem Schaltpunkt, so liegen die Ventilschwingen 116 unter dem Einfluß der Federn 117 in ihrer radial inneren Schwenklage, in welcher sie den Durchfluß des Öls aus dem Gehäuseinnenraum über die Kanäle 119, 150 und 11 in die Pumpe freigeben, so daß die Förderräume zwischen den Zähnen der Pumpenräder sich füllen können. Sind diese Räume gefüllt, so entsteht ein Stützdruck, der das Pumpengehäuse an der Drehung relativ zum drehfesten Ritzel 6 hindert. Je nachdem wie hoch das Drehmoment auf das Pumpengehäuse und somit auf das Sonnenrad vom Planetengetriebe her wirkt, werden zwei Leckströme aus den Druckräumen radial nach innen und von dort in das Planetengetriebegehäuse sowie in Umfangsrichtung ins Frei bzw. in die Saugräume fließen. Es entsteht ein gewisser Schlupf am Sonnenrad des Planetengetriebes. Der erstgenannte Teil dieses Leckstroms muß durch die Bohrungen 111 wieder ersetzt werden. Da bei niedriger Motordrehzahl diese Bohrungen mit den Bohrungen 150 und 145 fluchten, ist dies ohne weiteres möglich.

Wird nun die Drehzahl bis zur Schaltdrehzahl des Motors gesteigert, dann schwenken die Schwingen 116 unter dem Einfluß der Fliehkraft immer weiter nach außen, bis sie schließlich an entsprechenden Anschlägen 20a anliegen. In dieser Stellung ist der Zustrom von Öl in das Innere der Zahnradpumpe vollständig gesperrt. Es kann nunmehr kein Öl mehr in die Öltransportkammern zwischen den Zähnen der Verzahnungen der Zahnringpumpe gelangen. Man kann die Lage der Bohrung 119 und des Anschlags 120a so festlegen, daß noch ein minimaler Schmierölstrom in die Zahnradpumpe gelangt. Im übrigen ist jedoch in dieser Stellung keine nennenswerte Drehmomentübertragung mehr möglich, da die Leckströme den Druck im Druckraum der Pumpe schnell abbauen. Das Pumpengehäuse und damit das Sonnenrad 103 des Planetengetriebes weicht in Drehzahlrichtung aus, so daß darüber keine Drehmomentübertragung auf das Hohlrad 8 mehr erfolgt. Für diesen Betriebszustand ist der Freilauf 122 vorgesehen. Der Außenring 123 dieses Freilaufes ist durch den Deckel 124 fest mit der Abtriebsriemenscheibe 9 verbunden, so daß nunmehr der Betrieb der Aggregate mit einer Übersetzung 1 : 1 erfolgt.

Bei einer derartigen Hochtriebkonstruktion kann die Keilriemenscheibe auf der Kurbelwelle kleiner ausgeführt werden als bisher. Somit ist auch hier die Möglichkeit gegeben, daß trotz höherer maximalen Kurbelwellendrehzahl, wie sie in zunehmendem Maße bei modernen Verbrennungsmotoren vorkommen, die maximal zulässige Aggregatdrehzahl nicht überschritten wird.

Bei niedriger Motordrehzahl laufen dann die Nebenaggregate schneller als bei der Übersetzung 1 : 1, so daß beispielsweise vom Generator ausreichend elektrische Energie geliefert wird, ebenso beispielsweise von der Lenkhilfepumpe genügend Öldruck zur Verfügung steht für die hydraulische Lenkung im Leerlauf.

Ein wesentlicher Vorteil dieser Ausführung liegt darin, daß das ganze Getriebe einfach gegen die bisherige Riemenscheibe ausgetauscht werden kann, wobei die Riemenscheiben an den Aggregaten beibehalten werden können. Da bei eingeschalteter Kupplung (Hochtriebbetrieb) das Pumpengehäuse still steht, wird kein Öl umgewälzt, es treten also nur die Panschverluste und die Zahnreibungsverluste am Planetengetriebe auf, die leicht durch die große Oberfläche des rotierenden Gehäuses, das gleichzeitig Riemenscheibe darstellt, weggekühlt werden kann. Auch ist der Fertigungsaufwand gering, weil nur ein Rillenlager notwendig ist. Einer der gezeigten Nadelkäfige könnte noch eingespart werden. Ferner kann durch den Hochtrieb eine eventuell bisher vorhandene Viskositätskupplung am Lüfter eingespart werden, da der Lüfter kleiner dimensioniert werden kann.

Der Hauptvorteil dieser Konstruktion liegt aber darin, daß bei ausgekuppelter hydrostatischer Kupplung diese kein Öl, sondern nur noch mit Öl durchsetzte Luft umwälzt. Dadurch sind hier hohe Motordrehzahlen möglich. Da hierbei kein hydrostatischer Öldruck erzeugt wird, wird die Gefahr der Kavitationserosion und der Kaviationsgeräusche vermieden.

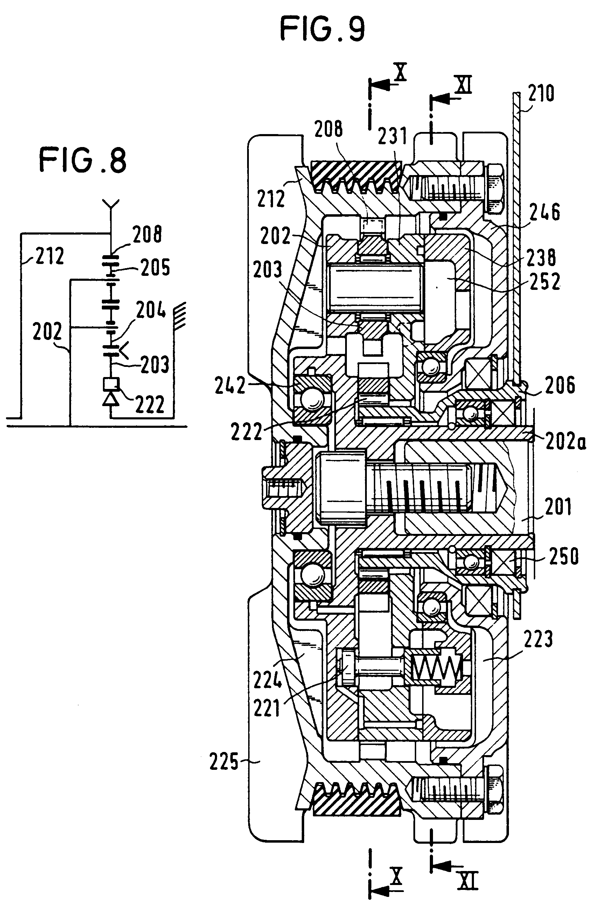

Bei dem nunmehr zu beschreibenden dritten Ausführungsbeispiel gemäß Fig. 8 bis 11 handelt es sich um ein Plusplanetengetriebe, also ein solches, bei dem die Planetenräder als Paare ausgebildet sind, so daß, wenn der Planetenträger stillsteht, beide Zentralräder im gleichen Sinne drehen, als Reduziertrieb, wobei die Druckdrosselregelung so wie beim ersten gezeigten Beispiel erfolgt.

Das hier verwendete Zweigangplanetengetriebe besitzt keine gesonderte Zahnringpumpe. Hier wirken vielmehr das Sonnenrad und die Planetenräder nach Art einer Zahnradpumpe zusammen. Dem Grunde nach kann eine solche Konstruktion auch so ausgebildet sein, daß das Hohlrad mit Planetenrädern als Zahnradpumpe zusammenwirkt.

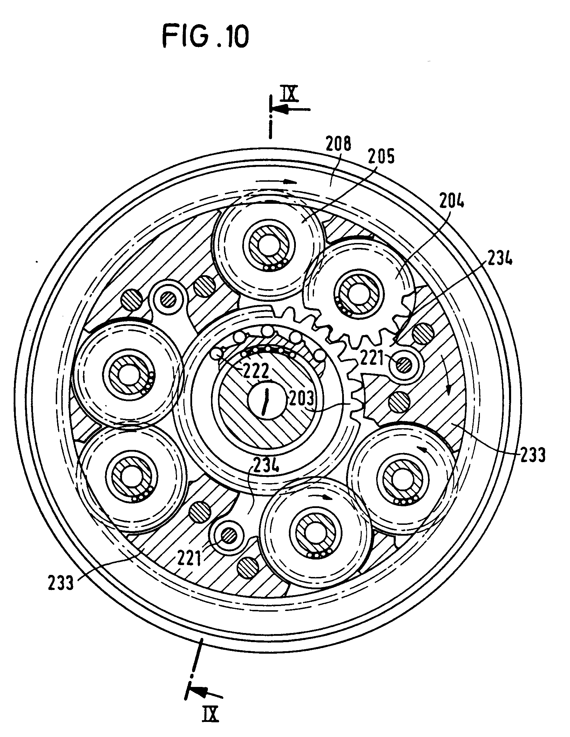

Bei dieser Ausführung ist auf der Kurbelwelle 201 verdrehfest der mit einer Traghülse 202a auf das Kurbelwellenende 201 aufgeschobene Planetenträger 202 befestigt. Der Planetenträger 202 trägt mittels der Lagerachsen 230 drei gleichmäßig über den Umfang verteilte Paare von Planetenrädern 204 und 205 angeordnet. Die beiden Räder 204 und 205 kämmen jeweils miteinander. Das Rad 204 kämmt mit dem Sonnenrad 203, während das Rad 205 jeweils mit dem Hohlrad 208 kämmt. Der Planetenträger 202 trägt in Fig. 9 rechts von den Planetenrädern eine Abdeckplatte 231, welche auch die Bolzen 230 lagert. Der Zwischenraum zwischen der Abdeckplatte 231 und dem Planetenträger 202 ist jeweils zwischen zwei benachbarten Planetenradsätzen durch ein Füllstück 233 ausgefüllt, welches zwischen sich, dem benachbarten in Drehrichtung nacheilenden Planetenrad 204 und dem Sonnenrad 203 einen in Fig. 10 erkennbaren Druckraum 234 freiläßt. Wie am besten aus Fig. 10 ersichtlich, fördern die Zahnräder des Rades 204, die auf einem Teil ihres Umfangs durch das Füllstück 233 abgedeckt sind, in diesem abgedeckten Bereich Öl in den Druckraum 234. Im gleichen Sinne wirkt die Verzahnung des Sonnenrades 203, dem die Verzahnung des Rads 205 des in Drehrichtung vorauseilenden Planetenpaares ebenfalls Öl zuführt.

Auf der Lagerhülse 202a des Planetenträgers 202 ist mittels in Fig. 9 erkennbarer Nadel- und Kugellager eine Traghülse 206 gelagert, welche mittels der Drehmomentstütze 210, die am nicht gezeigten Motorgehäuse in nicht dargestellter Weise befestigt ist, am Drehen gehindert ist. Auf diese Weise kann die Traghülse 206 über die Drehmomentstütze 210 ein Drehmoment auf den Innenring eines Freilaufes 222 übertragen, so daß der Freilauf 222 das auf ihm gelagerte Sonnenrad am Rückwärtsdrehen hindert.

Die Abdeckplatte 231 trägt auf ihrer den Zahnrädern abgewandten, also in Fig. 9 rechten Seite, eine einen Ölraum 252 in Fig. 9 rechts von der Abdeckplatte 231 schaffende Ölraumplatte 238.

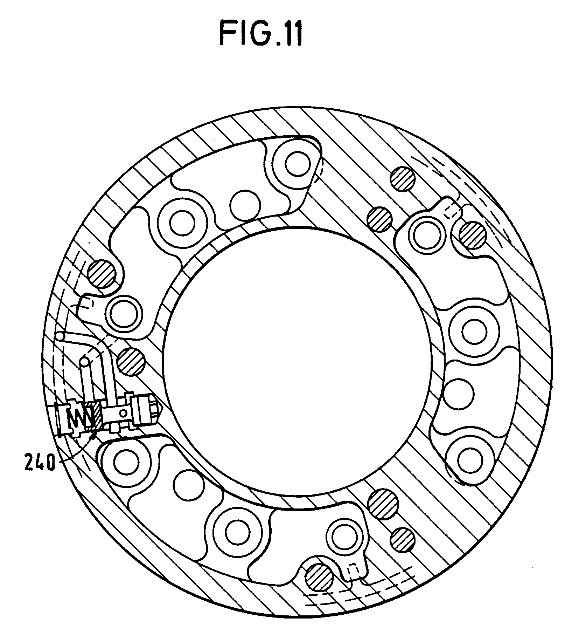

In den Zwischenräumen zwischen den Planetenrädern sind noch im von den Teilen 202, 231 und 233 gebildeten Pumpengehäuse die Absperrventile 221 gelagert, die in gleicher Weise funktionieren wie die Absperrventile 21 im ersten Beispiel. Diese Absperrventile regeln den Ölablauf aus den Druckkammern 234. Sie werden ebenso wie im Beispiel 1 durch Fliehkraftventile 240 gesteuert, von denen eines in Fig. 11 erkennbar ist.

Da Aufbau und Wirkungsweise dieser Ventilsteuerung die gleiche ist wie in Beispiel 1, ist sie hier nicht näher erläutert.

Das Getriebe besitzt schließlich ein Gehäuse, welches einen mittels der Kugellager 242 am Planetenträger 202 gelagerten Gehäusetopf 212 besitzt, der, wie aus Fig. 9 ersichtlich, außen zugleich als Riemenscheibe ausgebildet ist. Der Gehäusetopf wird auf seiner rechten Seite durch die Stirnplatte 246 abgedeckt, die wiederum mittels des Kugellagers 248 an der Ölkammerplatte 238 gelagert ist. Eine Dichtung 250 dichtet das Innere des Getriebegehäuses gegen die Lagerhülse 206 ab.

Bei angetriebenen Planetenträger und stillstehendem Sonnenrad 203 wird die Drehzahl des Hohlrades gegenüber dem Planetenträger reduziert, im Beispiel etwa im Verhältnis 1 : 1,75.

Im vorliegenden Fall ist die Zahnradpumpe dreifach ausgebildet wie am besten aus Fig. 10 ersichtlich.

Sind die Absperrventile 221 geschlossen, so entsteht in den drei Druckräumen 234 unter der Zahnradpumpenwirkung der beiden diese Druckräume jeweils zum Teil begrenzenden Zahnräder ein entsprechend hoher Öldruck, der eine Weiterdrehung dieser Zahnräder relativ zum Planetenträger 202 verhindert. Dadurch laufen jetzt Planetenträger 202 und Sonnenrad 203 und damit auch das Hohlrad mit der Übersetzung 1 : 1 von der Kurbelwelle um und treiben damit das Gehäuse 212 mit der von ihm gebildeten Riemenscheibe mit Kurbelwellendrehzahl an. Hierbei hebt der Freilauf 222 zwischen dem Sonnenrad 203 und der Drehmomentstütze 206/210 ab, da hierbei kein Reaktionsmoment ans Motorgehäuse abgegeben wird. Werden die Absperrventile nun in der aus dem ersten Beispiel bekannten Weise durch Anwachsen der Motordrehzahl geöffnet, so fällt der Druck in den Druckkammern 234 auf den Leerlaufdruck ab und das Planetengetriebe beginnt sich zu drehen. Eine Drehmomentübertragung direkt vom Planetenträger auf das Gehäuse und somit auf die Riemenscheibe ist nicht mehr möglich. Jetzt hat das Sonnenrad 203 das Bestreben sich nach rückwärts gegen die Motordrehzahl zu drehen, wird jedoch durch den Freilauf 222 daran gehindert. Jetzt läuft das Getriebe also im Reduzierbetrieb mit einem Reaktionsstützmoment auf das Sonnenrad. Dieser Betriebszustand der reduzierten Drehzahl am Abtrieb geht bis zur Motorhöchstdrehzahl und muß für den Dauerbetrieb bei dieser hohen Drehzahl geeignet sein. Hierbei können die Gesamtverluste zu einer nicht unerheblichen Aufheizung des Getriebes führen, da während dieses Betriebes eine erhebliche Erwärmung des Öls erfolgt.

Um diese Verluste aufzufangen, sind bei dieser Konstruktion nicht nur äußere Kühlrippen 225 und 226 vorgesehen, sondern auch innere Kühlrippen 223 und 224.

Bei dieser Konstruktion ist nicht nur zeitweilig das Planetenträgergehäuse 202, 231 mit Öl gefüllt, sondern auch das Getriebegehäuse und die Ölkammer 252. Die Füllung füllt allerdings nicht vollständig. Auch hier muß der Ölstand mindestens so groß sein, daß die Verzahnungen der Zahnräder 204 bei umlaufendem Getriebe auch nach Füllen der Druckkammer 234 noch in das durch die Fliehkraft nach außen gedrückte Öl eintauchen können, damit sie auch weiter Öl in die Druckkammern 234 fördern können. Der Ölstand sollte maximal jedoch so groß sein, daß er bei umlaufendem Gehäuse das Sonnenrad noch frei läßt.

Nach obigem arbeiten bei dieser Konstruktion die Zahnräder 203 und 204 als echte Ölpumpen, da sie,so lange das Absperrventil 221 geöffnet ist, tatsächlich Öl in den Druckraum fördern, aus dem dieses abströmen kann. Hier herrscht also auch ein echter Kurzschlußbetrieb wie im erstgenannten Beispiel bei hoher Drehzahl.

Bei niedriger Motordrehzahl läuft das Planetengetriebe en bloc um, so daß die Zahnräder relativ zueinander stillstehen, wodurch keine Zahnradgeräusche entstehen. Diese entstehen nur bei hoher Motordrehzahl, wo sie nicht stören. Das Getriebe baut sehr kurz. Alle hydrostatischen Kräfte gleichen sich gegenseitig aus, somit ist der Bauaufwand für die Lagerungen gering. Die Planetenräder können groß sein. Das ermöglicht niedrige Planetenraddrehzahlen, hohe Tragzahl der Planetenradlager und hohe Lebensdauer. Der Gesamtbauaufwand ist gering.

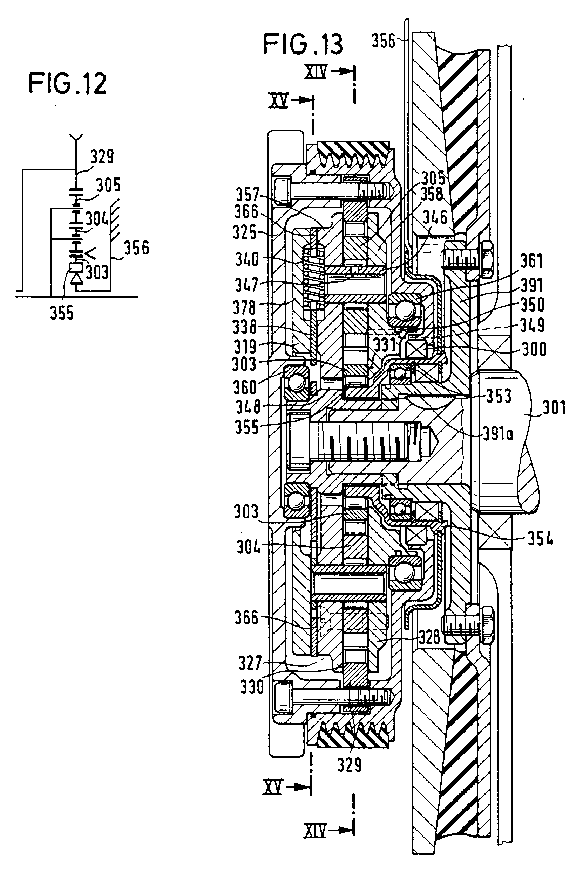

Das in den Figuren 12 bis 15 gezeigte vierte Beispiel stellt ebenso wie das dritte Beispiel ein Plusplanetengetriebe als Reduziergetriebe, aber mit einer Saugdrosselregelung dar, wie sie beim zweiten Beispiel durch die Ventilschwingen 116 bewirkt ist. Die konstruktive Ausbildung ist hier jedoch anders. Dieses Getriebe baut extrem kurz in Axialrichtung und weist darüberhinaus geringere Verluste auf.

Dieses Getriebe ist in äußerst vorteilhafter Weise geeignet, anstelle einer bisher angeordneten Riemenscheibe ohne Schaltgetriebe in ein Fahrzeug eingebaut zu werden, ohne daß große Änderungen notwendig sind. Die Regelung ist hierbei die gleiche wie im zweiten Beispiel, nämlich eine Saugdrosselregelung. Bei dem jetzt zu beschreibenden Beispiel trägt die Kurbelwelle 301 an ihrem freien Ende wieder den Schwingungsdämpfer 391, auf dessen Kragen 391a mittels eines Kugellagers 353 drehbar gelagert eine Traghülse 354 sitzt. Die Traghülse 354 trägt auch hier über einen Freilauf 355 das Sonnenrad 303 des Planetengetriebes. Die Traghülse 354 stützt sich mittels der Drehmomentstütze 356 in nicht dargestellter Weise gegen das Motorgehäuse ab.

Ähnlich wie im vorhergehenden Beispiel ist auch hier der als Pumpengehäuse ausgebildete Planetenträger aus einer in Fig. 13 dargestellten fest mit der Kurbelwelle verbundenen Planetenträgerplatte 357 und einer gegenüberliegenden Planetenträgerplatte 358 zusammengesetzt. Zwischen beiden Platten erstrecken sich Planetenradlagerachsen 346, auf denen die Planetenräder 304 und 305 von drei Planetenradpaaren umlaufen. Die Planetenräder 304 kämmen mit dem Sonnenrad 303 und die Planetenräder 305 mit dem Hohlrad 329, das hier ebenso wie im vorhergehenden Beispiel fest mit dem Getriebegehäuse 325 verbunden ist. Das Getriebegehäuse 325 ist zugleich als Keilriemenscheibe ausgebildet, wie dies aus Fig. 13 ersichtlich ist. Das Gehäuse 325 ist mittels der Kugellager 360 und 361 drehbar auf dem Planetenträger gelagert und nach außen abgedichtet.

Auch bei dieser Konstruktion erstrecken sich zwischen den beiden Planetenträgerplatten 357 und 358 in den von den Planetenrädern freigelassenen Räumen Füllstücke 364, welche ähnlich wie im vorhergehenden Beispiel die drei Planetenräder 304 mit dem Sonnenrad 331 als Ölpumpe zusammenwirkenlassen, um in den Druckräumen 336 jeweils entsprechenden Öldruck aufzubauen.

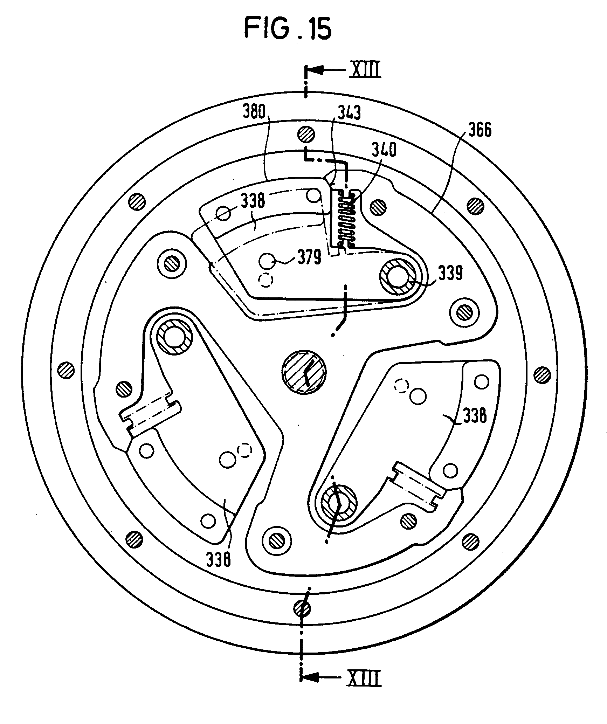

Bei diesem Getriebe wird die Saugdrosselregelung ähnlich wie im zweiten Beispiel mittels dreier Fliehgewichte tragender Fliehkraftschwingen 338 bewirkt, welche um Lagerzapfen 339 (Fig. 15) schwenkbar in Aussparungen in einem Distanzblech 366 gelagert sind. Die Ventilschwingen werden von Federn 340 radial nach innen gedrückt, während die Fliehkraft bestrebt ist, sie radial nach außen zu drücken. Jede der in diesem Beispiel vorgesehenen drei Ventilschwingen 338 besitzt eine Ventilbohrung 379, die bei niedriger Drehzahl des Getriebes und damit radial innenliegenden Ventilschwingen 338 mit einer entsprechenden Bohrung 319 in der

12

Planetenträgerplatte 357 und einer von außen auf dieser aufgesetzten Ringplatte 378 vorgesehen sind. Bei geringer Drehzahl kann also durch die Bohrungen 319 und 379 jeweils in die Saugbereiche der als Zahnradpumpen zusammenwirkenden Zahnräder 304 und 303 Öl einströmen. Bei durch die Fliehkraft radial nach außen gedrückten Ventilschwingen, also bei hoher Motordrehzahl, sind dagegen die Durchlässe 319 gesperrt.

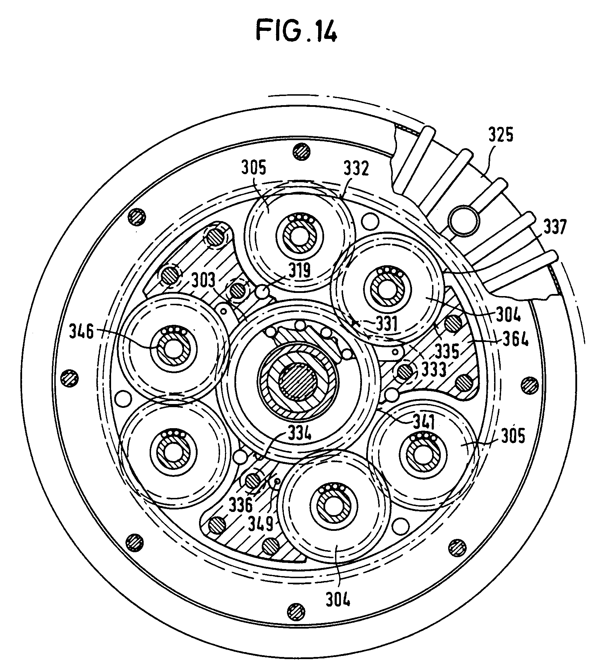

Wie man in Fig. 13 erkennt, greifen die Wände 357 und 358 des Planetenträgers nach außen über das Hohlrad 329 und dichten somit an den Stellen 330 den Innenraum des Planetengetriebes zusätzlich ab. Da auch das Sonnenrad 303 diesen Innenraum an den Axialflächen 331 abdichtet, kann hier nur eine geringe Leckstrommenge in den Räderraum eindringen. Wenn die Kanäle 319 geschlossen sind, wird sich diese Leckölmenge durch Fliehkraftwirkung in erster Linie am äußeren Umfang dieses Innenraumes aufhalten, d.h. im Bereich der Hohlradverzahnung und je nach Menge noch weiter nach innen erstrecken, beispielsweise bis zu dem radial äußeren Umfangsrand der Füllstücke 364. Laufen nun die verschiedenen Räder wie in Fig. 14 durch Pfeile angedeutet um, so entstehen an den Stellen 331 des Außereingriffkommens der Verzahnungen sich vergrößernde Räume, die saugend wirkende Unterdrücke hervorrufen. Die Stellen 332 des Ineingriffkommens der Verzahnungen bewirken jeweils einen Verdrängungseffekt. Solange in einem solchen in sich geschlossenen Raum eine gleiche Anzahl von Stellen des Außereingriffkommens und Stellen des Ineingriffkommens vorhanden ist, werden sich die Saug- und Druckstellen neutralisieren, so daß kein höherer Flüssigkeitsdruck zu erwarten ist.

Bei dem gezeigten Getriebe bewirken jedoch die Abdichtflächen 334 und 335 zwischen dem Kopfkreisdurchmesser des Sonnenrades bzw. des mit dem Sonnenrad kämmenden Planetenrades 304 und dem Füllstück 364, daß im Raum 336 ein Druck aufgebaut wird, Der Druck entsteht hier dadurch, daß an der Stelle 333 kein Öl weggefördert werden kann, während die Zahnlücken der Räder 304 und 303 zu dieser Stelle Öl hinfördern können. Aus diesem Druckraum kann also bei geschlossenen Durchlässen 319 Öl nur durch die Leckquerschnitte wie Laufspalte austreten. Der Druck im Raum 336 hängt nur noch davon ab, wie viel Öl sich in den Zahnlücken der beiden Zahnräder, also des Sonnenrades 303 und des Planetenrades 304 befindet. Solange sich im Planetenträgerinnenraum nur sehr wenig Lecköl befindet, das also radial von außen beispielsweise nur bis zu den radialen Außenrändern der Füllstücke 364 reicht, kann an den Stellen 337 durch das Rad 304 jeweils kein Öl angesaugt werden, da das Rad 304 gerade noch über dem durch die Fliehkraft bestimmten Ölspiegel freigeht. Die geringen Mengen Öl, die sich dann vielleicht dennoch in die Zahnlücken des Rades 304 eindrücken, werden durch die Fliehkraft sofort wieder nach radialaußen ausgeschleudert. Erst wenn der Ölspiegel weiter nach innen steigt, werden die Zahnlücken der Räder 304 ausreichend gefüllt, so daß in den Druckräumen 336 ein Öldruck aufgebaut wird, der eine weitere Drehung der Zahnräder des Planetengetriebes gegeneinander verhindert und die Übertragung eines Drehmoments erlaubt.

Ist nun der Innenraum des Getriebegehäuses, welches das Planetengehäuse umgibt, mit Flüssigkeit gefüllt bis etwa knapp außerhalb der Dichtlippe der Dichtung 300, so kann bei geöffnetem Drosselventil 319, also bei geringer Drehzahl der Kurbelwelle, das Öl ungedrosselt in den inneren Getrieberaum zwischen den Rädern des Planetengetriebes und den Füllstücken eintreten. Es wird dann ein Niveauausgleich etwa stattfinden zwischen Innen und Außen und der innere Getrieberaum wird ebenfalls weitgehend mit Öl gefüllt sein. Somit kann jetzt an der Stelle 337 und gegebenenfalls auch an der Stelle 341 Öl in die Zahnlücken der Räder 303 und 304 eintreten, so daß im Druckraum 336 Hochdruck entsteht, der es erlaubt, das außen an der Riemenscheibe abverlangte Drehmoment aufzunehmen. Auf diese Weise arbeitet die Kupplung mit einem Übersetzungsverhältnis 1 : 1 ähnlich wie im vorher beschriebenen Beispiel. Wächst nun die Drehzahl an und wird eine Drehzahl von beispielsweise 1200 Umdrehungen der Kurbelwelle pro Minute erreicht, so schwenken die Ventilschwingen 338 soweit nach außen, daß die Bohrungen 379 derselben nicht mehr mit den Bohrungen 319 fluchten und somit die Kanäle 319 gesperrt sind. Jetzt liegen die Ventilschwingen an entsprechenden Anschlägen 343 des Distanzbleches 366 an. Der einzige wesentliche Zufluß ist gesperrt. Es kann jetzt nur noch an den Spalten 330 zwischen den Planetenträgerplatten 357 und 358 und dem Hohlrad 329 Öl in den Innenraum des Planetenträgers gelangen, so daß sich der Druckraum 336 über die entsprechend dimensionierte Leckspalte 331 zwischen dem Sonnenrad 303 und dem Pumpengehäuse 357, 358 entleeren kann. Diese Entleerung erfolgt um so schneller, je höher noch der Druck im Raum 36 ist. Der Getrieberaum wird auf diese Weise stetig über die Stelle 337 entleert, so daß die Zahnradpumpe schließlich praktisch nichts mehr fördert und ein nennenswerter Druck im Druckraum 336 nicht mehr vorhanden ist. Jetzt kann das Planetengetriebe umlaufen.

Es ist hierbei wichtig, daß die Entleerung des Druckraumes 336 nicht wieder in den Planetenträgerinnenraum, also den Bereich zwischen den Planetenrädern, den Füllstücken und dem Sonnenrad erfolgt, sondern daß dieses Lecköl in den äußeren Gehäuseinnenraum zwischen dem Planetengetriebe und den äußeren Gehäusewandungen erfolgt. Daher ist die Dichtungsstelle 334 von großer Wichtigkeit, ebenso die axiale Abdichtung des Planetenrades 304 gegen die Planetenträgerplatten 357 und 358. Das andere Planetenrad 305 jedes Planetenradsatzes hat keine Abdichtfunktion für die hydrostatische Kupplung und kann somit mit genügend Axialspiel laufen, wodurch beträchtliche Reibungsverluste eingespart werden können. In Fig. 13 erkennt man axiale Anlaufscheiben, welche die Axialführung dieses Planetenrades übernehmen. Um Verdrängungsdrücke und Panschverluste zwischen diesem Planetenrad 305 und dem Hohlrad 329 zu reduzieren, wird zweckmäßig auch die Verzahnung des Hohlrades schmäler ausgeführt als das Planetenrad 304, welches ja genau gleich breit sein muß wie das Sonnenrad 303.

Auf diese Weise ist ein auch für hohe Drehzahlen geeignetes Reduziergetriebe geschaffen, bei dem die Zahnräder weitgehend in einem leeren Raum arbeiten, so daß keine hohen Pansch- und Verdrängungsverluste auftreten, wenn das Getriebe mit hoher Drehzahl als Reduziergetriebe läuft. Auch die viskosen Reibungsverluste in engen Spalten sind auf das notwendige Maß für die Abdichtung des Druckraumes 336 beschränkt, so daß auch diese Verluste reduziert werden. Um zu vermeiden, daß das Planetengetriebe ganz trocken läuft, und damit auch die vollnadeligen Planetenradlager ausreichend geschmiert werden, bohrt man vorteilhaft die Planetenradlagerachsen 346 innen hohl und versieht sie mit einer entsprechenden Bohrung zur Schmierung der Planetenradlager und der Verzahnungen.

Man kann auch im Bereich des Freilaufs 355 eine Abflußbohrung 348 vorsehen, damit der aus dem Druckraum im Inneren des Planetengetriebes strömende Leckstrom in das Innere des Außengehäuses möglichst drucklos in letzteres gelangen kann.

Für den Kräfteausgleich in den drei Planetenradsystemen ist es erforderlich, daß in den jeweiligen Druckräumen 336 genau der gleiche hydrostatische Druck im Kupplungszustand herrscht. Zu diesem Zweck sind Bohrungen 349 vorgesehen, welche die Druckräume 336 mit einer Ringnut 350 verbinden, die im Sitzbereich des Wälzlagers 361 eingestochen ist.

Auf diese Weise kann ein geringer Ausgleichsstrom dafür sorgen, daß in allen Druckräumen genau der gleiche Druck herrscht.

Da hier die Verluste geringer sind, können auch die äußeren Kühlrippen 325 kleiner ausgeführt werden und die gesamte Anordnung erfordert eine geringere axiale Erstreckung als beim vorhergehenden Beispiel.

Aus diesem Grunde ist dieses Reduziergetriebe besonders geeignet für solche Motoren, z.B. 5- und 6-Zylinder-Reihenmotoren, die mit einem Drehschwingungsdämpfer 391 ausgerüstet sein müssen. Wie aus Fig. 13 ersichtlich, fügt sich dieses Getriebe besonders günstig in die äußerst engen Raumverhältnisse zwischen diesem Schwingungsdämpfer und dem Kühlventilator eines solchen Motors ein.

Bei dieser vierten Ausführung ist die Regelung der hydrostatischen Kupplung konstruktiv sehr einfach. Da das Drosselventil für den Ölumlauf in den als hydrostatische Kupplung arbeitenden Außenzahradpumpen im Saugkanal angeordnet ist, wird bei offener Kupplung (kinematisch: im Reduzierbetrieb des Getriebes) in den Zahnradpumpen gar kein Öl mehr umgewälzt, da der Zustrom versperrt ist. Dadurch werden Umwälzverluste eingespart. Auch der Planetenträgerinnenraum, in dem die insgesamt 8 Zahnräder miteinander im Eingriff sind, ist weitestgehend von Öl freigehalten, weil die als Ölpumpenräder wirkenden, mit dem Sonnenrad kämmenden Planetenräder diesen Raum ständig leersaugen. Somit ist Ölverdrängungsleistung und Panscharbeit eingespart, was vor allen Dingen bei hoher Eingangsdrehzahl wichtig ist. Auch baut diese Lösung besonders kurz, weil Kühlrippenfläche eingspart werden kann. Schließlich ist auch geräuscharmer Betrieb möglich wegen reduziertem Ölumlaufes und reduzierter Kühlrippenoberfläche.

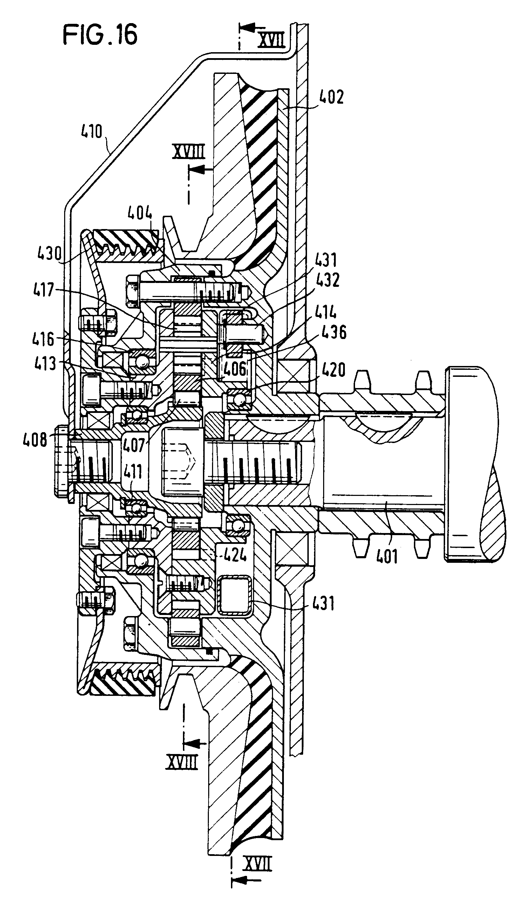

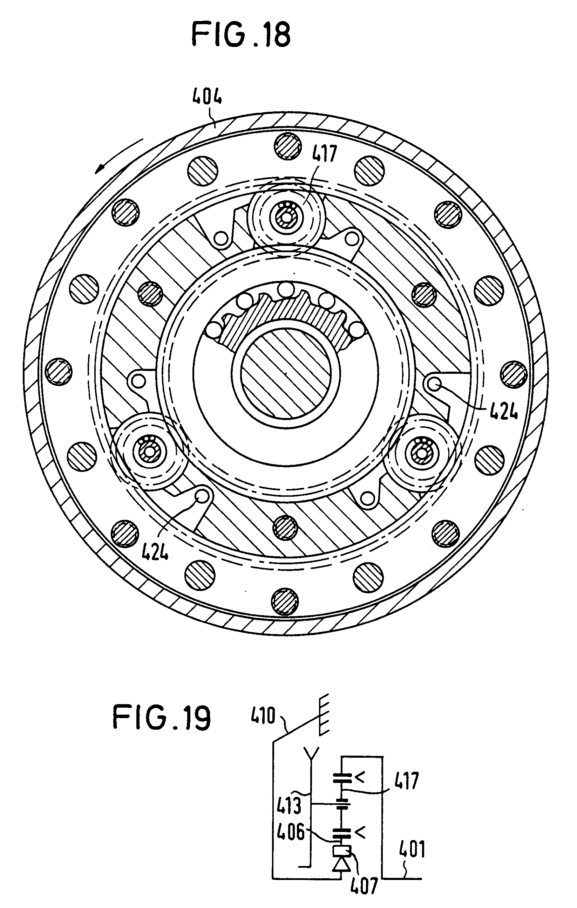

In vieler Hinsicht am günstigsten erscheint jedoch die nachfolgend erläuterte weitere Ausführungsform gemäß Fig. 16 - 19.

Auch bei dieser fünften Ausführungsform ist das Getriebe als Zweigangplanetengetriebe mit Antrieb am Hohlrad ausgebildet. Auch hier trägt die Kurbelwelle 401 des Verbrennungsmotors einen Schwingungsdämpfer 402, der mit dem Getriebe zu einer Einheit "integriert" ist. Das äußere Getriebegehäuse läuft daher starr mit der Kurbelwelle 401 um. Es wird einerseits von dem Teil 403 des Schwingungsdämpfers und andererseits vom Gehäusetopf 404 gebildet. Im Gehäuse ist das Hohlrad 405 des Planetengetriebes, wie aus der Zeichnung ersichtlich, fest gelagert. Das Sonnenrad 406 ist mit Hilfe eines Freilaufes 407 auf einer die Kurbelwelle verlängernden Hülse 408 gelagert, die mittels einer Drehmomentstütze 410 in nicht dargestellter Weise am Motorgehäuse abgestützt ist. Die Hülse 408 ist mittels eines Kugellagers 411 im Planetenträger gelagert, der aus zwei einander zu einem Planetenträgergehäuse ergänzenden Platten 413 uund 414 besteht. Der Planetenträger 413, 414 ist wiederum mittels eines Kugellagers 416 im Gehäusetopf 404 des Getriebes drehbar gelagert. Er trägt in üblicher Weise mittels Planetenträgerachsen drei über den Umfang gleichmäßig verteilte Planetenräder 417, deren jedes zugleich mit dem Sonnenrad 406 und dem Hohlrad 405 kämmt.

Die Platte 414 ist ebenfalls über ein Kugellager 420 am Teil 403 des Schwingungsdämpfers des Verbrennungsmotors gelagert. Hier ist also das Hohlrad starr mit der Kurbelwelle verbunden, während das Sonnenrad über einen Freilauf gegen das Motorgehäuse abgestützt ist und der Planetenträger frei umlaufen kann. Der Planetenträger trägt dabei die Abtriebsriemenscheibe. Auch hier wirken die drei Planetenräder 417 zusammen mit dem Sonnenrad 406 oder auch dem Hohlrad 405 ähnlich wie in den beiden vorherbeschriebenen Beispielen als Zahnradpumpen zusammen und bilden somit die hydrostatische Kupplung.

Die Regelung erfolgt hier in Abhängigkeit von der Eingangsdrehzahl durch die Befüllung oder Nichtbefüllung des Planetenträgerinnenraumes mit Flüssigkeit am Zulauf 424. Diese sechs Zulauflöcher 424 sind in der Platte 414 ausgespart. Je nachdem wie hoch der durch die Fliehkraft in seiner Form definierte Flüssigkeitsspiegel im Inneren des Getriebegehäuses 404 steht, kann über die Einströmöffnungen 424 Flussigkeit in das Innere des als Pumpe wirkenden Planetenträgergehäuses einströmen. Steht der Ölspiegel hoch, so strömt Flüssigkeit durch die Öffnungen 424 ein, wird durch die "Zahnradpumpe" in den Druckraum gepreßt und blok-kiert dort das Umlaufen der Räder des Planetengetriebes relativ zueinander. Ist das Flüssigkeitsniveau im rotierenden Getriebegehäuse jedoch entsprechend niedrig, also der Durchmesser des Flüssigkeitsniveaus entsprechend groß, so kann keine Flussigkeit mehr eindringen, die vorhandene Flüssigkeit wird durch die Leckspalte herausgedrückt und das Getriebe kann umlaufen. In diesem Zustand wirkt das Sonnenrad als Drehmomentstütze, da es auf den Freilauf 407 abgestützt ist und die Riemenscheibe 430, die fest mit dem Planetenträger verbunden ist, wie dies aus der Zeichnung ersichtlich ist, läuft nun mit reduzierter Drehzahl um.

Die erforderliche Ölspiegeländerung wird hier in äußerst einfacher Weise durch drei Schwimmer 431 bewirkt, welche über Zapfen 432 am Teil 403 gelagert sind. Diese Schwimmer sind hohle Metallkörper, deren "spezifisches Gewicht" nidriger ist als das der Flüssigkeit.

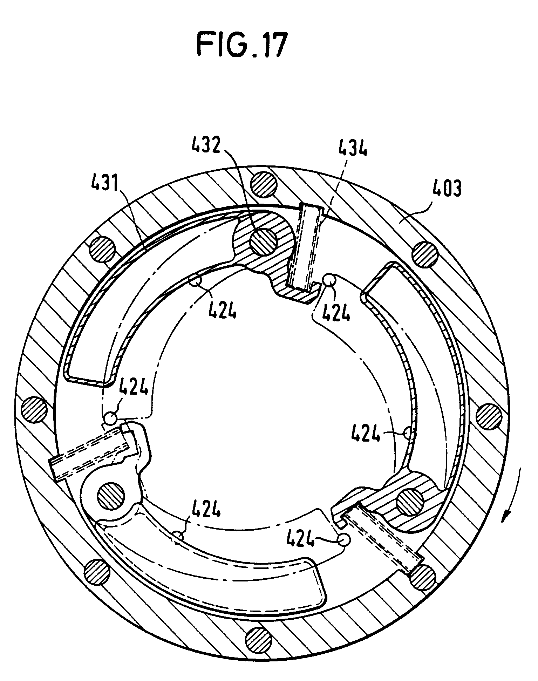

Diese drei Schwimmer 431 stehen unter dem Druck von Federn 434, welche, wie aus Fig. 17 ersichtlich, bestrebt sind, die Schwimmer im Uhrzeigersinn radial nach außen zu verschwenken. Die Schwimmer befinden sich in dem z.T. mit Öl gefüllten Ringraum 436.

Läuft der Motor mit niedriger Drehzahl um, so werden die Schwimmer durch die Federn 434 nach außen gedrückt. Das hat zur Folge, daß das Ölniveau in dem umlaufenden Gehäuse relativ hoch ist und über die Überströmkanten der Durchlässe 424 hinein in das Innere des vom Planetenträgergehäuse gebildeten Pumpenraumes strömen kann. Nun wird im Inneren der Pumpe Druck aufgebaut, welcher eine Relativdrehung der Pumpenräder verhindert, so daß jetzt die Riemenscheibe 430 mit Kurbelwellendrehzahl angetrieben wird. Steigt die Drehzahl über einen bestimmten Schaltpunkt, so verdrängt das Öl im Ringraum 436 unter dem Einfluß der Fliehkraft bei einer bestimmten Drehzahl beispielsweise von 1200 U/min. die Schwimmer, die ja leichter sind als das Öl, radial nach innen. Dadurch bewegt sich der innere Ölspiegel radial nach außen. Nun kann kein Öl mehr durch die Durchlässe 424 strömen und unter dem Einfluß des Drehmoments pumpt die Pumpe über Spaltverluste ihre Druckräume mehr oder weniger leer und kann nun umlaufen. Jetzt erfolgt der Abtrieb über den relativ zum Gehäuse umlaufenden Planetenträger mit verringerter Drehzahl. Dieser Zustand wird nach einer bestimmten Drehzahlsteigerung beispielsweise von 200 U/min. erreicht.

Diese Konstruktion weist wesentliche Vorteile auf. So ist sie baulich sehr wenig aufwendig, da nur drei Planetenräder erforderlich sind und der Gesamtaufbau des Regelsystems äußerst einfach ist. Die Verlustleistung ist gering und die Bauweise ist klein. Auch sind bei umlaufendem Planetengetriebe die Planetenraddrehzahlen niedrig. Schließlich ist auch die Fliehkraftbelastung der Planetenlager wesentlich reduziert, da im Betrieb des Planetengetriebes der Steg mit geringerer Drehzahl als die Kurbelwelle umläuft.

Ein wesentliches fakultatives Merkmal der Erfindung liegt noch darin, daß das Gehäuse, welches den Zahnradsatz aufnimmt, relativ zum Motor drehbar gelagert ist und in wenigstens einem der beiden Schaltzustände des Getriebes umläuft.

Oben wurden fünf verschiedene Ausführungsformen beschrieben, die jeweils bevorzugte Ausführungen darstellen. Für den Fachmann ist es ersichtlich, daß die verschiedenen Merkmale verschiedener Ausführungsfomen auch sinnvoll miteinander kombiniert werden können. So ist beispielsweise eine Regelung nach der letztgenannten Ausführungsform auch bei anderen Ausführungsformen möglich, wobei dann unter Umständen aber auch die Schwimmer nicht als Schwimmer sondern als Verdrängungskörper, die schwerer sind als das Öl ausgebildet sein können.

In diesem Fall wird bei steigender Drehzahl der Ölspiegel angehoben.

## Patentansprüche

1. Automatisches Zweiganggetriebe für den Antrieb wenigstens eines Nebenaggregates (Lichtmaschine, Ventilator, etc.) eines Kraftfahrzeugverbrennungsmotors durch letzteren

mit einem Zahnradsatz (7, 8; 105, 106; 203, 204; 303, 304), bei welchem mindestens ein Zahnrad (7; 105; 203; 303), dessen Drehachse zu der Eingangswelle des Getriebes (1; 101; 201; 301) konzentrisch ist, mit einem anderen Zahnrad (8; 106; 204; 304) in Eingriff ist,

mit einem Schaltelement, das als Freilauf (14) ausgebildet ist,

und mit einem weiteren, mit der Eingangswelle (1; 101; 201; 301) rotierenden, Schaltelement (15, 21; 119, 150; 221, 240; 319; 379) zum Abbremsen und Freigeben der Relativdrehung zwischen den Zahnrädern des Zahnradsatzes, und

mit einem Gehäuse (3, 4, 5; 107, 137; 212, 246),

15

EP 0 351 510 B1

**dadurch gekennzeichnet,**

daß das weitere Schaltelement (15, 21; 119, 150; 221, 240; 319, 379) durch Fliehkraft betätigbar ist,

daß das Gehäuse (3, 4, 5; 107, 137; 212, 246) konzentrisch zur Eingangswelle umläuft und einen Flüssigkeitsvorrat enthält,

daß das eine Zahnrad (7; 105; 203; 303) mit dem anderen Zahnrad (8; 106; 204; 304) konzentrisch um die Eingangswelle (1; 101; 201; 301) umläuft, wobei beide Zahnräder die gleiche Drehachse haben,

daß wenigstens zwei Zahnräder des Zahnrdsatzes (7, 8; 105, 106; 203, 204; 303, 304) in der Art einer hydrostatischen Pumpe zusammenwirken und mit der Flüssigkeit beaufschlagbar sind,

und daß das ebenfalls mit dem Gehäuse umlaufende Fliehkraftschaltelement (15, 21; 119, 150; 221, 240; 319, 379) die Beaufschlagung der Pumpe regelt.

2. Getriebe nach Anspruch 1, dadurch gekennzeichnet, daß der Zahnradsatz vom Ritzel (8, 106, 20) und Innenzahnring (7, 105) einer Zahnringpumpe gebildet ist, deren Saug- (30) und Druckraum (31) ddurch einen Flüssigkeitskreislauf verbunden sind und daß das Fliehkraftschaltelement (15, 21) den Durchfluß in diesem Kreislauf steuert.

3. Getriebe nach Anspruch 2, dadurch gekennzeichnet, daß im Flüssigkeitskreislauf hinter dem Druckraum der Pumpe ein zum Teil gasgefüllter Flüssigkeitsvorratsraum liegt, und daß das Fliehkraftschaltelement den Zufluß vom Flüssigkeitsvorratsraum zum Saugraum der Pumpe steuert.

4. Getriebe nach Anspruch 2, dadurch gekennzeichnet, daß das Pumpenritzel (8, 106) konzentrisch zur Eingangswelle (100, 101) angeordnet ist.

5. Getriebe nach einem der Ansprüche 1 bis 4, dadurch gekennzeichnet, daß zwei Abtriebselemente (10, 12) vorgesehen sind, von denen das eine über einen Freilauf (14) unmittelbar von der Kurbelwelle (1) antreibbar und das andere fest mit dem Ritzel (8) der Zahnringpumpe (7, 8) verbunden ist, deren Gehäuse (3, 4, 5) fest mit der Kurbelwelle (1) verbunden ist, so daß bei offenem Flüssigkeitskreislauf der Zahnring (7) mit dem Pumpengehäuse (3, 4, 5) relativ zum Ritzel (8) umlaufen kann und das eine Abtriebselement (12) über den Freilauf (14) von der Eingangswelle (1) mitgenommen wird, während bei geschlossenem Flüssigkeitskreislauf das Pumpengehäuse (3, 4, 5) das Ritzel (8) mitnimmt und so ins Schnelle übersetzt (Fig. 1 - 4).

6. Getriebe nach Anspruch 5, dadurch gekennzeichnet, daß das Zahnringpumpengehäuse (3, 4, 5) das Getriebegehäuse ist.

7. Planetengetriebe nach Anspruch 2 oder 4, dadurch gekennzeichnet, daß die Zahnringpumpe (103, 105, 106, 140) bei Drosseln des Flüssigkeitskreislaufs das kleinere Zentralrad (140) des Planetengetriebes abbremst oder zur Drehung freigibt (Fig. 5 - 7).

8. Getriebe nach Anspruch 7, dadurch gekennzeichnet, daß das kleinere Zentralrad als Sonnenrad (103) ausgebildet ist.

9. Getriebe nach Anspruch 8, dadurch gekennzeichnet, daß das Ritzel (106) der Zahnringpumpe nicht drehbar ist und das frei drehbar gelagerte Gehäuse (103, 140) derselben mit dem Sonnenrad (103) fest verbunden ist.

10. Getriebe nach Anspruch 9, dadurch gekennzeichnet, daß der fest mit dem Getriebegehäuse (107) verbundene Abtrieb (109) über einen Freilauf (122) direkt von der Eingangswelle (101) antreibbar ist, daß der Planetenträger (102) fest mit der Eingangswelle (101) verbunden ist, und daß das Hohlrad (108) fest mit dem Getriebegehäuse (107) verbunden ist.

11. Planetengetriebe nach Anspruch 1, dadurch gekennzeichnet, daß der Zahnradsatz von wenigstens zwei miteinander kämmenden Rädern (203, 204; 303, 304) des Planetengetriebes gebildet ist (Fig. 8 - 17).

12. Planetengetriebe nach Anspruch 11, dadurch gekennzeichnet, daß ein Füllstück (233, 364) den Raum zwischen den Kopfkreisflächen der kämmenden Räder (203, 204; 303, 304) dort, wo dren Zähne aufeinander zulaufen, bis auf eine Druckkammer (234, 336) nahe dem Eingriffsbereich ausfüllt, und daß die Abbremsung bzw. Freigabe durch Steuerung eines Zuflußkanals (19) zum Einzugsbereich der so gebildeten Zahnradpumpe oder eines Abflußkanals (221) aus der Druckkammer erfolgt (Fig. 8 - 17).

13. Planetengetriebe nach Anspruch 11 oder 12, dadurch gekennzeichnet, daß das Sonnenrad (203, 303) und wenigstens ein Planetenrad (204, 304) den Zahnradsatz bilden, wobei vorzugsweise jedes Planetenrad (204, 304) mit einem anderen Planetenrad (205, 305) und dem Sonnenrad oder dem Hohlrad kämmt (Fig. 8 - 15).

14. Planetengetriebe nach einem der Ansprüche 11 bis 13, dadurch gekennzeichnet, daß das Planetengetriebe bis auf das Hohlrad in einem im Getriebegehäuse (212, 246; , ) umlaufenden geschlossenen Innengehäuse (202, 231, 238; 357, 358, 378) angeordnet ist, dessen Flüssigkeitszulauf mittels einer fliehkraftgesteuerten Ventilanordnung (221, 240; 319) absperrbar ist, und das über geringfügige Drosseldurchlässe mit hohem Durchflußwiderstand durch die Pumpenwirkung entleerbar ist (Fig. 12 - 15).

15. Getriebe nach einem der Ansprüche 1 bis 14, dadurch gekennzeichnet, daß das Fliehkraftschaltelement ein an den Flüssigkeitskreislauf im mit der Eingangswelle rotierenden Gehäuse (3, 4, 5; Innengehäuse

16

EP 0 351 510 B1

202, 231, 238)) angeschlossenes Fliehkraftventil besitzt, das durch die Fliehkraft gegen Federkraft betätigbar im Pumpengehäuse (3, 4, 5; Innengehäuse (202, 231, 238)) gelagert ist und den Durchfluß im Kreislauf steuert (Fig. 2, 3, 4).

16. Getriebe nach Anspruch 15, dadurch gekennzeichnet, daß das Fliehkraftventil (15, 240) den Durchfluß über wenigstens ein Absperrventil (21, 221) im von einer Kurzschlußleitung vom Druckraum zum Saugraum der Zahnradpumpe gebildeten Kreislauf absperren kann.

17. Getriebe nach Anspruch 15 oder 16, dadurch gekennzeichnet, daß das Fliehkraftventil einen radial zur Drehachse des Gehäuses gegen Federkraft durch die Fliehkraft verschiebbaren Kolben (15, 240) aufweist.

18. Getriebe nach einem der Ansprüche 15 bis 17, dadurch gekennzeichnet, daß das Absperrventil einen quer zur Richtung der Fliehkraft gegen Federkraft durch Flüssigkeitsdruck verschiebbaren Kolben (21, 221) aufweit.

19. Getriebe nach einem der Ansprüche 15 bis 18, dadurch gekennzeichnet, daß das Fliehkraftventil (15, 21; 240, 221) beim Anwachsen der Drehzahl der Eingangswelle den Durchfluß im Kreislauf bei einer Drehzahl der Eingangswelle unterbricht, die merklich höher ist als die Drehzahl, bei welcher das Fliehkraftventil bei Absinken der Drehzahl den Durchfluß wieder freigibt.

20. Getriebe nach Anspruch 19, dadurch gekennzeichnet, daß das Fliehkraftventil (15, 240) in seiner achsnahen Lage nur die Saugseite der Zahnradpumpe mit einem Steuer-Druckraum (24) verbindet, der zum Teil durch eine Stirnwand (25) des Absperrventilkolbens (21, 221) begrenzt ist, daß der Druck im Steuer-Druckraum bestrebt ist, den Kolben (21) des Absperrventils gegen die Kraft von dessen Feder (20) in eine die Kurzschlußleitung vom Druckraum zum Saugraum freigebende Lage zu verschieben und daß in letzterer Lage der Steuer-Druckraum (24) des Absperrventils (21) mit der Druckseite (31) der zahnradpumpe verbunden ist.

21. Getriebe nach Anspruch 15, dadurch gekennzeichnet, daß das Fliehkraftschaltelement als Drosselventil (Fig. 7 und 15) ausgebildet ist, das den Flüssigkeitsdurchlauf setig um 0 % bis 100 % drosseln kann.

22. Getriebe nach Anspruch 1, dadurch gekennzeichnet, daß das Drossenventil wenigstens einen in der Rotationsebene des Getriebes verlagerbaren flachen Schieber (16, 338) aufweist, der einen Durchlaß (150, 379) besitzt, der in seiner einen Grenzlage einen quer zur Ebene des Schiebers verlaufenden Durchlaß für den Kreislauf im Gehäuse freigibt und in seiner anderen Grenzlage den Gehäusedurchlaß sperrt.

23. Getriebe nach Anspruch 22, dadurch gekennzeichnet, daß der Schieber (116, 338) als im Getriebegehäuse schwenkbar gelagerte Platte ausgebildet ist.

24. Getriebe nach einem der Ansprüche 11 bis 14, dadurch gekennzeichnet, daß das Fliehkraftschaltelement als Ventilanordnung eine ständig offene Zulauföffnung vom Flüssigkeitsvorratsraum zur Saugseite der Pumpe aufweist, daß im Flüssigkeitsvorratsraum wenigstens ein Verdrängungskörper vorgesehen ist, der ein anderes spezifisches Gewicht hat als die Flüssigkeit und unter dem Einfluß der Fliehkraft und einer Federkraft in Abhängigkeit von der Eingangsdrehzahl radial nach außen und innen bewegbar ist, und daß der Verdrängungskörper in seiner äußeren Lage durch Verdrängung der Flüssigkeit den durch die Fliehkraft geformten Flüssigkeitsspiegel soweit nach innen anhebt, daß Flüssigkeit durch die Zulauföffnung in den Saugraum der Pumpe strömen und diesen und auch den Druckraum füllen kann, während bei innenliegendem Schwimmer der Flüssigkeitsspiegel nicht bis zur Zulauföffnung reicht.

25. Getriebe nach Anspruch 24, dadurch gekennzeichnet, daß der Verdrängungskörper ein Schwimmer ist, der von der Federkraft radial nach außen in die Flüssigkeit gedrückt wird und von der durch die Fliehkraft nach außen gedrückten Flüssigkeit gegen die Federkraft radial nach innen gedrückt werden kann.

26. Getriebe nach Anspruch 24 oder 25, dadurch gekennzeichnet, daß der Verdrängungskörper kreisringsektorförmig und an einem Ende um eine zur Eingangswelle parallele Achse schwenkbar gelagert ist.

## Claims

1. An automatic two-speed transmission for the drive of at least one auxiliary unit (dynamo, fan, etc.) of a motor-vehicle internal-combustion engine by the latter, comprising

a gear set (7, 8; 105, 106; 203, 204; 303, 304) in which at least one gear (7; 105; 203; 303), of which the axis of rotation is concentric with the input shaft of the transmission (1; 101; 201; 301), is in engagement with another gear (8; 106; 204; 304),

a control element which is formed as freewheel (14),

and a further control element (15, 21; 119; 150; 221, 240; 319; 379) rotating with the input shaft (1; 101; 201; 301) for retarding and releasing the relative rotation between the gears of the gear set, and

a housing (3, 4, 5; 107, 137; 212, 246),

**characterized in**

that the further control element (15, 21; 119, 150; 221, 240; 319, 379) is actuatable by centrifugal force,

17

that the housing (3, 4, 5; 107, 137; 212, 246) revolves concentrically to the input shaft and contains a fluid supply,

that the one gear (7; 105; 203; 303) revolves with the other gear (8; 106; 204; 304) concentrically about the input shaft (1; 101; 201; 301), both gears having the same axis of rotation,

that at least two gears of the gear set (7, 8; 105, 106; 203, 204; 303, 304) cooperate in the manner of a hydrostatic pump and can be influenced with the fluid,

and that the centrifugal control element (15, 21; 119, 150; 221, 240; 319, 379) also revolving with the housing controls the influencing of the pump.

2. A transmission according to claim 1, characterized in that the gear set is formed by the pinion (8, 106, 20) and internal ring gear (7, 105) of a ring gear pump, of which the suction chamber (30) and pressure chamber (31) are connected by a fluid circulation and that the centrifugal control element (15, 21) controls the flow in said circulation.

3. A transmission according to claim 2, characterized in that in the fluid circulation behind the pressure chamber of the pump there is a partially gasfilled fluid supply chamber, and that the centrifugal control element controls the flow from the fluid supply chamber to the suction chamber of the pump.

4. A transmission according to claim 2, characterized in that the pump pinion (8, 106) is arranged concentrically to the input shaft (100, 101).

5. A transmission according to one of the claims 1 to 4, characterized in that two output elements (10, 12) are provided, of which the one is drivable via a freewheel (14) directly by the crankshaft (1) and the other is fixedly connected to the pinion (8) of the ring gear pump (7, 8), of which the housing (3, 4, 5) is fixedly connected to the crankshaft (1) so that when the fluid circulation is open the ring gear (7) can revolve with the pump housing (3, 4, 5) relatively to the pinion (8) and the one output element (12) is entrained by the input shaft (1) via the freewheel (14), whilst with a closed fluid circulation the pump housing (3, 4, 5) entrains the pinion (8) and thus transmits in fast speed (Figs. 1 - 4).

6. A transmission according to claim 5, characterized in that the ring gear pump housing (3, 4, 5) is the transmission housing.

7. A planetary transmission according to claim 2 or 4, characterized in that the ring gear pump (103, 105, 106, 140) on throttling the fluid circulation retards the smaller central gear (140) of the planetary transmission or releases said gear for rotation (Figs. 5 - 7).

8. A transmission according to claim 7, characterized in that the smaller central gear is formed as sun gear (103).

9. A transmission according to claim 8, characterized in that the pinion (106) of the ring gear pump is not rotatable and the freely rotatably mounted housing (103, 140) of said pump is fixedly connected to the sun gear (103).

10. A transmission according to claim 9, characterized in that the output (109) fixedly connected to the transmission housing (107) is drivable via a freewheel (122) directly by the input shaft (101), that the planet carrier (102) is fixedly connected to the input shaft (101) and that the ring gear (108) is fixedly connected to the transmission housing (107).

11. A planetary transmission according to claim 1, characterized in that the gear set is formed by at least two intermeshing gears (203, 204; 303, 304) of the planetary transmission (Figs. 8 - 17).

12. A planetary transmission according to claim 11, characterized in that a filling piece (233, 364) fills the space between the outside diameter faces of the meshing gears (203, 204, 303, 304) where the teeth thereof taper towards each other except for a pressure chamber (234, 336) near the engagement region, and that the retardation or release is effected by control of an influx passage (19) to the intake region of the gear pump thus formed or of an efflux passage (221) from the pressure chamber (Figs. 8 - 17).

13. A planetary transmission according to claim 11 or 12, characterized in that the sun gear (203, 303) and at least one planet gear (204, 304) form the gear set, preferably each planet gear (204, 304) meshing with another planet gear (205, 305) and the sun gear or the ring gear (Figs. 8 - 15).

14. A planetary transmission according to one of the claims 11 to 13, characterized in that the planetary transmission except for the ring gear is arranged in a closed inner housing (202, 231, 238, 357, 358, 378) which revolves in the transmission housing (212, 246) and the fluid influx of which can be blocked by means of a centrifugal-force-controlled valve arrangement (221, 240, 319) and which is adapted to be discharged via small throttle passages with high flow resistance by the pump action (Figs. 12 - 15).

15. A transmission according to one of the claims 1 to 14, characterized in that the centrifugal control element comprises a centrifugal force valve which is connected to the fluid circulation in the housing (3, 4, 5; inner housing 202, 231, 238) rotating with the input shaft and which is mounted for actuation by centrifugal force against spring force in the pump housing (3, 4, 5; inner housing 202, 231, 238) and controls the flow in the circulation (Figs. 2, 3, 4).

16. A transmission according to claim 15, characterized in that the centrifugal force valve (15, 240) can shut off the flow via at least one shutoff valve (21, 221) in the circulation formed by a short-circuit conduit from the pressure chamber to the suction chamber of the gear pump.

17. A transmission according to claim 15 or 16, characterized in that the centrifugal force valve comprises a piston (15, 240) displaceable radially of the axis of rotation of the housing against spring force by the centrifugal force.

18. A transmission according to one of the claims 15 to 17, characterized in that the shutoff valve comprises a piston (21, 221) displaceable transversely of the direction of the centrifugal force against the spring force by fluid pressure.

19. A transmission according to one of the claims 15 to 18, characterized in that the centrifugal force valve (15, 21, 240, 221) when the rotational speed of the input shaft increases interrupts the flow in the circulation at a speed of the input shaft which is appreciably higher than the speed at which the centrifugal force valve releases the flow again when the rotational speed drops.

20. A transmission according to claim 19, characterized in that the centrifugal force valve (15, 240) in its position close to the axis connects only the suction side of the gear pump to a control pressure space (24) which is partially defined by an end wall (25) of the shutoff valve piston (21, 221), that the pressure in the control pressure space tends to urge the piston (21) of the shutoff valve against the force of the spring (20) thereof into a position releasing the short-circuit line from the pressure chamber to the suction chamber, and that in the latter position the control pressure space (24) of the shutoff valve (21) is connected to the pressure side (31) of the gear pump.

21. A transmission according to claim 15, characterized in that the centrifugal control element is formed as throttle valve (Figs. 7 and 15) which can throttle the fluid passage continuously by 0 % to 100 %.

22. A transmission according to claim 21, characterized in that the throttle valve comprises at least one flat slide (16, 338) which is displaceable in the rotational plane of the transmission and which has a passage (150, 379) which in its one limit position releases a passage for the circulation in the housing and in its other limit position blocks the housing passage, said passage extending transversely of the plane of the slide.

23. A transmission according to claim 22, characterized in that the slide (116, 338) is formed as plate pivotally mounted in the transmission housing.

24. A transmission according to one of the claims 11 to 14, characterized in that the centrifugal control element as valve arrangement comprises a permanently open influx opening from the fluid supply chamber to the suction side of the pump, that in the fluid supply chamber at least one displacement body is provided which has a specific weight different to that of the fluid and under the influence of the centrifugal force and a spring force is movable radially outwardly and inwardly in dependence upon the input speed, and that the displacement body in its outer position by displacement of the fluid raises the fluid level formed by the centrifugal force inwardly to such an extent that fluid can flow through the influx opening into the suction chamber of the pump and fill the latter and also the pressure chamber whilst with internally disposed float the fluid level does not reach the influx opening.

25. A transmission according to claim 24, characterized in that the displacement body is a float which is urged by the spring force radially outwardly into the fluid and by which fluid outwardly pressed by the centrifugal force can be pressed radially inwardly against the spring force.

26. A transmission according to claim 24 to 25, characterized in that the displacement body has the form of an annular sector and at one end is mounted pivotally about an axis parallel to the input shaft.

## Revendications

1. Transmission automatique à deux vitesses pour l'entraînement, par un moteur thermique de véhicule automobile, d'au moins un organe secondaire (alternateur, ventilateur, etc. ) de ce moteur,
avec un groupe de roues dentées (7, 8; 105, 106; 203, 204; 303, 304), dont au moins une roue dentée (7; 105; 203; 303), dont l'axe de rotation est concentrique à l'arbre primaire (1; 101; 201; 301) de la transmission, est en prise avec une autre roue dentée (8; 106; 204; 304),
avec un élément de commutation réalisé sous la forme d'un mécanisme à roue libre (14),
et avec un élément de commutation supplémentaire (15, 21; 119, 150; 221, 240; 319; 379), tournant avec l'arbre primaire (1; 101; 201; 301) et destiné à freiner et libérer la rotation relative entre les roues dentées du groupe de roues dentées, et
avec un carter (3, 4, 5; 107, 137; 212, 246)
**caractérisée**
en ce que l'élément de commutation supplémentaire (15, 21; 119, 150; 221, 240; 319; 379) peut être actionné par la force centrifuge,

en ce que le carter (3, 4, 5; 107, 137; 212, 246) tourne concentriquement à l'arbre primaire et contient une réserve de liquide,

en ce que la première roue dentée (7; 105; 203; 303) tourne concentriquement avec l'autre roue dentée (8; 106; 204; 304) autour de l'arbre primaire (1; 101; 201; 301), les deux roues dentées ayant le même axe de rotation,

en ce qu'au moins deux roues dentées du groupe de roues dentées (7, 8; 105, 106; 203, 204; 303, 304) coopèrent à la manière d'une pompe hydrostatique et peuvent être sollicitées par le liquide,

et en ce que l'élément de commutation à force centrifuge (15, 21; 119, 150; 221, 240; 319; 379), qui tourne lui aussi avec le carter, régule la sollicitation de la pompe.

2. Transmission selon la revendication 1, caractérisée en ce que le groupe de roues dentées est constitué du pignon (8, 106, 20) et de la couronne à denture intérieure (7, 105) d'une pompe à denture intérieure dont la chambre d'aspiration (30) et la chambre de pression (31) sont reliées par un circuit de liquide, et en ce que l'élément de commutation à force centrifuge (15, 21) commande l'écoulement dans ce circuit.

3. Transmission selon la revendication 2, caractérisée en ce qu'une chambre de réserve de liquide, partiellement remplie de gaz, se trouve en aval de la chambre de pression de la pompe dans le circuit de liquide, et en ce que l'élément de commutation à force centrifuge commande l'écoulement depuis la chambre de réserve de liquide vers la chambre d'aspiration de la pompe.

4. Transmission selon la revendication 2, caractérisée en ce que le pignon de pompe (8, 106) est disposé concentriquement à l'arbre primaire (100, 101).

5. Transmission selon l'une des revendications 1 à 4, caractérisée en ce que deux éléments de sortie (10, 12) sont prévus, dont l'un peut être directement entraîné par le vilebrequin (1) par l'intermédiaire d'un mécanisme à roue libre (14) et dont l'autre est assemblé finement au pignon (8) de la pompe à denture intérieure (7, 8), dont le carter (3, 4, 5) est assemblé fixement au vilebrequin (1), de sorte que, lorsque le circuit de liquide est ouvert, la couronne dentée (7) peut tourner avec le carter de pompe (3, 4, 5) par rapport au pignon (8), et l'un (12) des éléments de sortie est conjointement entraîné par l'arbre primaire (1) par l'intermédiaire du mécanisme à roue libre (14), tandis que, lorsque le circuit de liquide est fermé, le carter de pompe (3, 4, 5) entraîne avec lui le pignon (8) et réalise ainsi une transmission multiplicatrice (figures 1 à 4).

6. Transmission selon la revendication 5, caractérisée en ce que le carter (3, 4, 5) de la pompe à denture intérieure est le carter de la transmission.

7. Transmission à engrenage planétaire selon la revendication 2 ou 4, caractérisée en ce que la pompe à denture intérieure (103, 105, 106, 140 ), lors de l'étranglement du circuit de liquide, freine ou libère la rotation de la roue centrale plus petite (140) de la transmission à engrenage planétaire (figures 5 à 7).

8. Transmission selon la revendication 7, caractérisée en ce que la roue centrale plus petite est conçue comme roue solaire (103).

9. Transmission selon la revendication 8, caractérisée en ce que le pignon (106) de la pompe à denture intérieure n'est pas rotatif, et le carter (103, 140) de cette pompe, monté en rotation libre, est assemblé fixement à la roue solaire (103).

10. Transmission selon la revendication 9, caractérisée en ce que l'élément de sortie (109), assemblé fixement au carter (107) de la transmission, peut être directement entraîné par l'arbre primaire ( 101) par l'intermédiaire d'un mécanisme à roue libre (122), en ce que le porte-satellites (102) est assemblé fixement à l'arbre primaire (101), et en ce que la couronne (108) est assemblée fixement au carter (107) de la transmission.

11. Transmission à engrenage planétaire selon la revendication 1, caractérisée en ce que le groupe de roues dentées est constitué par au moins deux roues en prise mutuelle (203, 204; 303, 304) de la transmission à engrenage planétaire (figures 8 à 17).

12. Transmission à engrenage planétaire selon la revendication 11, caractérisée en ce qu'un élément de remplissage (233, 364) remplit l'espace entre les faces de cercle de tête des roues en prise (203, 204; 303, 304), où leurs dentures arrivent l'une vers l'autre, à l'exception d'une chambre de pression (234, 336) à proximité de la région d'engrènement, et en ce que le freinage ou la libération s'effectue par la commande, respectivement, d'un canal d'alimentation (19) de la région d'entrée de la pompe à engrenage ainsi formée, ou d'un canal d'évacuation (221) de la chambre de pression (figures 8 à 17).

13. Transmission à engrenage planétaire selon la revendication 11 ou 12, caractérisée en ce que la roue solaire (203, 303) et au moins une roue satellite (204, 304) constituent le groupe de roues dentées, chaque roue satellite (204, 304) étant de préférence en prise avec une autre roue satellite (205, 305) et la roue solaire ou la couronne (figures 8 à 15).

14. Transmission à engrenage planétaire selon l'une des revendications 11 à 13, caractérisée en ce que la transmission à engrenage planétaire est, à l'exception de la couronne, disposée dans un carter intérieur fermé (202, 231, 238; 357, 358, 378), qui est disposé périphériquement dans le carter (212, 246) de la transmission et dont l'alimentation en liquide peut être isolée au moyen d'un ensemble de soupape (221, 240; 319) commandé par la force centrifuge, et qui peut être vidé sous l'action de la pompe, par de petits passages d'étranglement et avec une résistance élevée à l'écoulement (figures 12 à 15).

15. Transmission selon l'une des revendications 1 à 14, caractérisée en ce que l'élément de commutation à force centrifuge possède une soupape à force centrifuge, qui est raccordée au circuit de liquide dans le carter (3, 4, 5; carter intérieur 202, 231, 238) rotatif avec l'arbre primaire, qui est montée dans le carter de pompe (3, 4, 5; carter intérieur 202, 231, 238) en pouvant être actionnée par la force centrifuge contre une force de ressort, et qui commande l'écoulement dans le circuit (figures 2, 3, 4).

16. Transmission selon la revendication 15, caractérisée en ce que la soupape à force centrifuge (15, 240) peut, par l'intermédiaire d'au moins une soupape d'isolement (21, 221), isoler l'écoulement dans le circuit formé par une conduite en court-circuit menant de la chambre de pression à la chambre d'aspiration de la pompe à engrenage.

17. Transmission selon la revendication 15 ou 16, caractérisée en ce que la soupape à force centrifuge présente un piston (15, 240) que la force centrifuge peut déplacer radialement à l'axe de rotation du carter, contre une force de ressort.

18. Transmission selon l'une des revendications 15 à 17, caractérisée en ce que la soupape d'isolement présente un piston (21, 221) qu'une pression de liquide peut déplacer transversalement à la direction de la force centrifuge, contre une force de ressort.

19. Transmission selon l'une des revendications 15 à 18, caractérisée en ce que la soupape à force centrifuge ( 15, 21; 240, 221 ), lors de l'augmentation du régime de l'arbre primaire, interrompt l'écoulement dans le circuit à un régime de l'arbre primaire qui est nettement supérieur au régime auquel la soupape à force centrifuge libère à nouveau l'écoulement lors de la diminution du régime.

20. Transmission selon la revendication 19, caractérisée en ce que la soupape à force centrifuge (15, 240), dans sa position proche de l'axe, ne relie que le côté d'aspiration de la pompe à engrenage à une chambre de pression de commande (24) qui est en partie délimitée par une paroi frontale (25) du piston (21, 221) de la soupape d'isolement, en ce que la pression dans la chambre de pression de commande tend à déplacer le piston (21) de la soupape d'isolement, contre la force de son ressort (20), dans une position libérant la conduite en court-circuit menant de la chambre de pression à la chambre d'aspiration, et en ce que, dans cette dernière position, la chambre de pression de commande (24) de la soupape d'isolement (21) est reliée au côté de pression (31) de la pompe à engrenage.

21. Transmission selon la revendication 15, caractérisée en ce que l'élément de commutation à force centrifuge est réalisé sous la forme d'une soupape d'étranglement (figures 7 et 15), qui peut étrangler l'écoulement de liquide en continu de 0 à 100%.

22. Transmission selon la revendication 21, caractérisée en ce que la soupape d'étranglement présente au moins un tiroir plan (16, 338), qui peut être déplacé dans le plan de rotation de la transmission et qui possède un passage (150, 379) qui, dans une de ses positions limites, dégage dans le carter un passage pour le circuit s'étendant transversalement au plan du tiroir et, dans son autre position limite, obture le passage du carter.

23. Transmission selon la revendication 22, caractérisée en ce que le tiroir (116, 338) est réalisé sous la forme d'une plaque montée pivotante dans le carter de la transmission.

24. Transmission selon l'une des revendications 11 à 14, caractérisée en ce que l'élément de commutation à force centrifuge sous forme d'ensemble de soupape présente une ouverture d'admission ouverte en permanence depuis la chambre de réserve de liquide vers le côté d'aspiration de la pompe, en ce qu'est prévu dans la chambre de réserve de liquide au moins un corps de refoulement de densité différente de celle du liquide et qui peut être déplacé radialement vers l'extérieur et vers l'intérieur sous l'influence de la force centrifuge et d'une force de ressort et en fonction du régime d'entrée, et en ce que le corps de refoulement, dans sa position extérieure, en refoulant le liquide, soulève le niveau de liquide, formé par la force centrifuge, suffisamment vers l'intérieur pour que du liquide puisse s'écouler par l'ouverture d'admission dans la chambre d'aspiration de la pompe et remplir cette dernière ainsi que la chambre de pression, tandis que, lorsque le flotteur se trouve en position inférieure, le niveau de liquide n'atteint pas l'ouverture d'admission.

25. Transmission selon la revendication 24, caractérisée en ce que le corps de refoulement est un flotteur qui est poussé radialement vers l'extérieur dans le liquide par la force de ressort et qui peut être poussé radialement vers l'intérieur, contre la force de ressort, par le liquide refoulé vers l'extérieur par la force centrifuge.

26. Transmission selon la revendication 24 ou 25, caractérisée en ce que le corps de refoulement est en forme de secteur de couronne et, à une extrémité, est monté pivotant autour d'un axe parallèle à l'arbre primaire.

FIG.1

FIG.2

FIG.3

FIG.4

# FIG.5

# FIG.6

# FIG.7

# FIG.9

# FIG.8

# FIG .10

# FIG.11

240

FIG.12

FIG.13

## FIG.14

# FIG . 15

# FIG.16

# FIG.17

# FIG.18

404

417

424

424

# FIG.19

410

413

406

417

401

407